# EUROPEAN PATENT SPECIFICATION

(11) **EP 1 631 495 B1**
(45) Date of publication and mention of the grant of the patent: **03.04.2013**
(21) Application number: 04735576.3
(22) Date of filing: 01.06.2004
(51) Int. Cl.: B29C 51/04, B29C 51/06, B29C 51/10, B29C 51/20, B29C 51/26, B65D 1/06, B65D 51/20

(54) **METHOD OF PRODUCING PACKAGING CONTAINERS FROM PLASTICS AND A PACKAGING MACHINE**
VERFAHREN ZUR HERSTELLUNG VON VERPACKUNGSBEHÄLTERN AUS KUNSTSTOFF UND VERPACKUNGSMASCHINE
PROCEDE DE PRODUCTION DES CONTENEURS EN PLASTIQUE ET MACHINE DE PRODUCTION

(30) Priority: 30.05.2003 DE 10324749
(43) Date of publication of application: 08.03.2006
(73) Proprietor: Kourtoglou S.A., 210 53 Nea Kios - Argolida (GR)
(72) Inventor: KOURTOGLOU, Dimitris, GR-210 53 Argolida (GR)
(74) Representative: Grünecker, Kinkeldey, Stockmair & Schwanhäusser
(86) International application number: PCT/EP2004/005901
(87) International publication number: WO 2004/106162

(56) References cited:
- EP-A- 0 001 690
- EP-A- 0 894 609
- EP-A- 0 900 557
- EP-A- 1 080 869
- EP-A- 1 275 580
- EP-A- 1 275 580
- EP-A- 1 386 839
- DE-A- 2 460 429
- DE-A1- 19 706 797
- DE-U1- 20 115 233
- FR-A- 1 289 047
- GB-A- 2 107 291
- GB-A- 2 325 924
- US-A- 4 328 905
- US-A- 4 496 064
- US-A- 5 788 101
- US-B1- 6 264 050
- US-B1- 6 324 819
- US-B1- 6 324 819

## Description

The present invention relates to a method of producing packaging containers of plastics and to a packaging machine comprising a molding station.

So far the production of packaging containers of plastics, in particular for packing foodstuff, has had various disadvantages which have had the effect that efficiently produced plastic packaging containers only exist in a very limited number of shapes and are normally devoid of any reclosing possibilities.

In particular, it has so far only been possible to produce straight-walled, cylindrical or conical cups or containers without any undercuts by deep-drawing, blow-molding or similar processes.

Such containers, however, turn out to be troublesome as to their stability and standing capacity. Moreover, liquid substances, for instance paste-like foodstuff, cannot be filled into such containers at a high speed because the reaction forces always tend to splash back the packing material during the filling process. Therefore, liquid substances cannot be filled into straight-walled or conical containers at such a high speed as is desired and, in particular, is also possible with containers having undercuts, in which the filling opening has a smaller cross-section than the remaining container cross-section, whereby back splashing or ejection is avoided.

For manufacturing reasons packaging containers which have been made from a plastic film could thus not be provided with shapes that have turned out to be advantageous in the glass or ceramic sector or in the case of injection-molded containers. Moreover, with packaging containers made from a plastic film, it is often not possible to permanently reclose the corresponding filling openings because they are often only closed by a disposable sealing film which after having been tom off cannot be permanently closed again.

Said difficulties have partially been overcome by a technology disclosed in the applicant's US 6 324 819 B1, in which packaging containers are manufactured from a continuous web of synthetic material in a combined deep-drawing/blow-molding process in a form-fill-seal packaging machine.

US 6 324 819 B1 discloses a method and an apparatus for producing containers from a strip of moldable synthetic plastic film that is transported longitudinally in a given direction. To achieve a greater variety as to the producibility of packaging containers, the plastic film is first displaced by at least one plug of the upper mold in a deep-drawing process into a mold cavity of the lower mold and a final molding operation is subsequently performed by a blow-molding process with supply of a gaseous medium into the mold, with the film being placed on a wall of the mold cavity formed in the lower mold. Such packaging method and apparatus may be applied for producing packaging containers of a large variety of desired cross-sectional shapes. However, due to the fact that the plastic film is fed in a continuous unseparated sheet form to the mold station, placement errors of the plastic film in the mold station can occur, thereby negatively affecting the manufacturing accuracy of the formed plastic container.

EP 1 275 580 A1 discloses a method of making filling and closing re-entrant receptacles from a thermoplastic strip. Said method uses a cutter to make initial cuts in the strip leaving attachment points that are broken to separate the recipients once they have been filled and sealed. The cuts are preferably made by fusion of the thermoplastic strip for sterility, and the attachment points are broken by moving pistons applied to the rims of the recipient after filling and sealing. EP 1 275 580 A1 only shows to pre-cut the closures for the containers but despite these pre-cuts still a continuous unseparated plastic film is submitted to the forming process with all the disadvantages already referred to with regard to US 6 324 819 B1.

It is therefore the object of the present invention to provide a method of producing packaging containers of plastics, and a packaging machine which exhibit a much greater variety as to the producibility of packaging containers, in particular packaging for foodstuff, ensuring high standing capacity and dimensional stability, at a highly efficient production.

In particular, efficient use of the plastic film material and increased manufacturing accuracy regarding the axial conciseness and centricity, roundness of the container and accuracy of sealing cover affixation to the container is desired. ,

Regarding the method of producing such plastic packaging containers, said objective according to the present invention is performed by the features of claim 1.

Accordingly, different from the prior art, prior to forming the packaging containers, individual film pieces are separated from the basic film, the packaging containers being formed from said film pieces after said separation.

Accordingly, a film piece can be exactly dimensioned, cut and oriented prior to being placed in a mold station, in which said singular film piece unconnected to any film web is first displaced by at least one plug of the upper mold in a deep-drawing process into a mold cavity of the lower mold and a final molding operation is subsequently performed by a blow-molding process with supply of a gaseous medium into the mold, with the film being placed on a wall of the mold cavity formed in the lower mold. Packaging containers having virtually any desired cross-section of a high standing capacity can thus be produced which exhibit excellent packaging characteristics even at a reduced wall thickness and can e.g. be provided with screw caps, or re-usable caps crimped thereon or attached in snap-fit to either an upper or bottom side of the packaging container.

The method is particularly advantageous in that unavoidable tensions, dislocations or inaccuracies occurring in the course of processing a continuous web, in particular in conjunction heating and/or cooling steps are avoided by the initial supply of single separate film pieces as a basis for the further manufacturing process.

Preferred embodiments are laid down in the further subclaims.

Due to the fact that the basic film, from which the packaging containers are formed, does not, as has hitherto been the case, pass through the whole production process in the form of a continuous film, but is already separated into individual film portions and pieces at the beginning of the production process, tensions in the material and the resultant large-area deformations and distortions, which are especially caused by the different temperatures of the individual production sections, can be reduced substantially, since the deformations and the tensions in the material will be limited to a respective separate film portion.

The containers comprise an "opening assistant", such as a radially projecting flap or tear tab at the sealing film closing the packaging container (forming an "easy opening" feature), the packaging containers are individually closed (after having been prepared by deep-drawing and blow-molding and filling with a product to be supplied) by respective cover portions separated from a sealing film.

According to a preferred embodiment, the individual film pieces are moved, after the separation, separately from one another along at least one conveying means, individual stations for forming the finished, filled and closed packaging container being arranged along said conveying means.

In the course of this process, at least one packaging container is formed from each film piece, preferably a plurality of packaging containers is formed from each film piece according to a preferred embodiment In the latter case, all the formed film containers are preferably arranged in one row, the arrangement of containers extending preferably perpendicular to the conveying direction, but diagonal or other inclined arrangement of the packaging containers with respect to a travelling direction of the film pieces is also possible as well as staggered disposal of multiple rows in the travelling direction of the film pieces depending on the cross-section of the packaging containers and the width/length ratio of the respective film piece, adapted thereto.

Preferably such packaging containers being individually closed and having an "ear opening assistant", such as a radially projecting flap or "ear" (tear flange or tab) provided through the sealing film cover are partially cut from the film piece surrounding at first, prior to the attaching of the cover portion, then the cover portion (sealing film) separated from a sealing film supply and corresponding essentially to the area of the respective opening of the packaging container is attached, preferably in a two-stage-process, and then the packaging container is finally and completely cut and separated from the surrounding film piece by further cutting the bridging web portions, which so far have still served to transport the pre-fabricated, filled and covered container to the discharge station.

Generally cutting of the packaging container from the surrounding individual film piece may occur partially or completely along a prefabricated, predetermined braking line defining an outer circumferential edge of a rim portion of the container.

According to a preferred embodiment, the cover portion, after having been placed on the feed opening and the surface of the film piece, respectively, is held at several points and then secured to the packaging container, especially by means of spot welding, before it is fully connected to said packaging container by means of welding. Preferably, the packaging container is not completely separated from the film piece (sealing) until it has been completely closed (air tightly sealed) with the sealing film.

Preferably, the basic film or the film piece separated therefrom as well as the sealing film are sterilized, especially by exposure to UV radiation, before a material to be packed is filled into the packaging container and the sealing film is applied to said packaging container.

Other preferred embodiments are laid down in the respective subclaims.

Regarding a packaging machine of the type as indicated above, the afore-indicated objective, according to the present invention, is performed by a packaging machine having the features of claim 45.

It is advantageously possible through the solution according to the invention to produce e.g. packed foodstuff in a compact packaging machine unit, wherein at the input side the plastic film is discontinuously supplied in the format of container size adapted series of separate film pieces for forming the packaging container in the molding station while at the output side the packing material which has individually been packed into the individual packaging containers leaves the packaging machine.

Preferred developments of the subject matter of the invention are also outlined with respect to the packaging machine in the remaining subclaims.

The present invention shall now be described in more detail with reference to embodiments and associated drawings, in which:
- Fig. 1: shows a schematic representation of a preferred embodiment of the production method for filled and closed packaging containers of plastic,
- Fig. 2a, 2b: show a side view and a top view of an embodiment of the apparatus for producing filled and closed packaging containers of plastic (form-fill-seal material), substantially in line with the scheme of Fig. 1,
- Fig. 3: shows a perspective view of the apparatus according to Fig. 2a and Fig. 2b,
- Fig. 3a: shows another perspective view of the apparatus according to Fig. 2a and Fig. 2b,
- Fig. 3b: shows a detail view of a spot welding and sealing station according to Fig. 3a (form-fill-seal machine) of plastic,
- Fig. 4: shows a detail view of the area marked in Fig. 2b,
- Fig. 5: shows a detail view of the area marked in Fig. 3,
- Fig. 6a, 6b: show a side view and top view of another embodiment of the apparatus for producing filled and closed packaging containers of plastic (form-fill-seal machine), similar to Figs. 2a and 2b,
- Fig. 7: shows a perspective view of the apparatus according to Figs. 6a and 6b,
- Fig. 8: shows a detail view of an area marked in Fig. 6b,
- Fig. 9: shows a partial detail view of a film piece with a packaging container being partially cut out but connected still to the film piece by opposite bridging web portions,
- Fig. 10a to 10e: show schematic cross-sectional views of a pair of upper and lower molds in the molding station of an apparatus for producing packaging containers, said apparatus being shown in Figs. 2, 3, 6 and 7 as well as the mode of operation of said molds,
- Fig. 11: shows a plan view on a lower mold according to another embodiment than explained in Fig. 10, in particular used in the apparatus of Figs. 2, 3, 6 and 7,
- Fig. 12: shows a schematic representation of the molding/deep-drawing-blow molding process using an undercut, split lower mold (cross-section),
- Fig. 13: shows a representation of the molding/deep/drawing-blow molding process as in Fig. 12 but showing a finished state of forming a packaging container with the split lower mold opened,
- Fig. 14: shows a schematic plan view of a film piece with one container (for illustrative purposes only) adapted to be closed by a sealing cover portion having an "easy opening" feature,
- Fig. 15: shows a packaging container produced under one of the methods of the present application and being an embodiment of a respective packaging container having at least one undercut,
- Fig. 16: shows a schematic plan view similar to Fig. 14 with a sealing film closure having an "easy opening " feature,
- Fig. 17: shows a schematic plan view similar to Fig. 15 with the cutting means to release the packaging container from the film piece,
- Fig. 18: shows a schematic cross-sectional side view of a reverse forming method providing a take-out opening at a bottom of the packaging container,
- Fig. 19: shows a schematic plan view similar to Fig. 18 showing the anvil-support of an opening rim portion at a bottom of the packaging container,
- Fig. 20: shows a schematic cross-sectional view similar to Figs 18 and 19, but for another embodiment, providing a closure of the fill-in opening of the packaging container through a film of synthetic resin comprising the material of the container,
- Figs. 21 a to 21 c: show several embodiments of packaging containers produced under the embodiments of the present invention,
- Figs. 22a to 22d: show a packaging container according to an embodiment of the present invention in front view, different perspective views and in between view,
- Figs. 23a to 23b: show a packaging container according to an embodiment (without sealing cover) but having a thread for attaching a recloseable screw cap,
- Figs. 24a to 24b: show a bottle-type packaging container according to an embodiment being manufactured by "reverse forming" and having threads for affixing a recloseable screw cap,
- Figs. 25a to 25c: show a packaging container in perspective views having undercuts, a closure means (thread) for affixing a re-closable screw cap and being sealed with a sealing film closure portion.

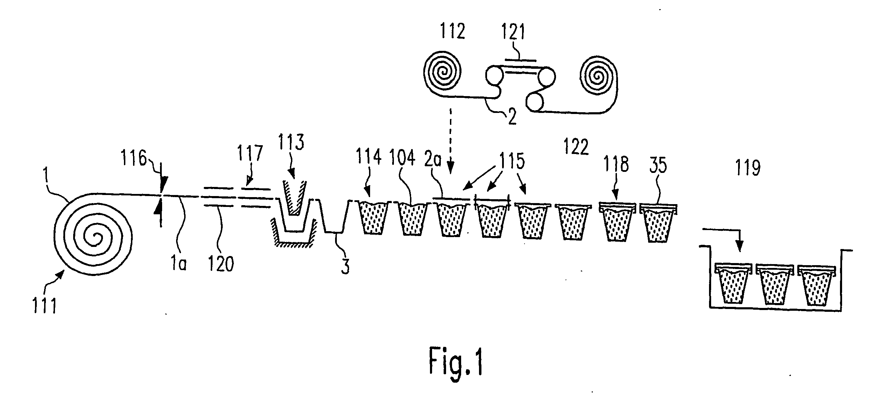

Figure 1 is a schematic representation of a preferred embodiment of the manufacturing method for producing filled and closed packaging containers of plastic materials, said method being explained in further detail when the description proceeds also in conjunction with the associated machinery and devices used.

It should be noted that in Fig. 1 only for simplicity reasons the containers are displayed to be in a usual conical shape. However, the specifics of the current invention are just focused on the manufacturing of differently shaped containers, namely those which have at least one undercut or a plurality of undercuts and, accordingly, have a longitudinal cross-section contoured to be a combination of negative and positive curses, i.e. having concave and convey portions along their outer walls.

Preferably, a plastic basic film 1 being used that can stretched when heated, i.e. PS, PVC, PET, PP, multi-layer films comprising such materials and similar films are to be used.

Although this is not shown in detail, the packaging basic film 1, in particular being from a plastic film, can also comprise a multi-lid structure and may be flamed, inscribed, decorated, perforated (i.e. composed of a plurality of layers) and may be subject to a corresponding pre-treatment for product identification, i.e. being provided with inscriptions, pictures, labels and other decorative printing.

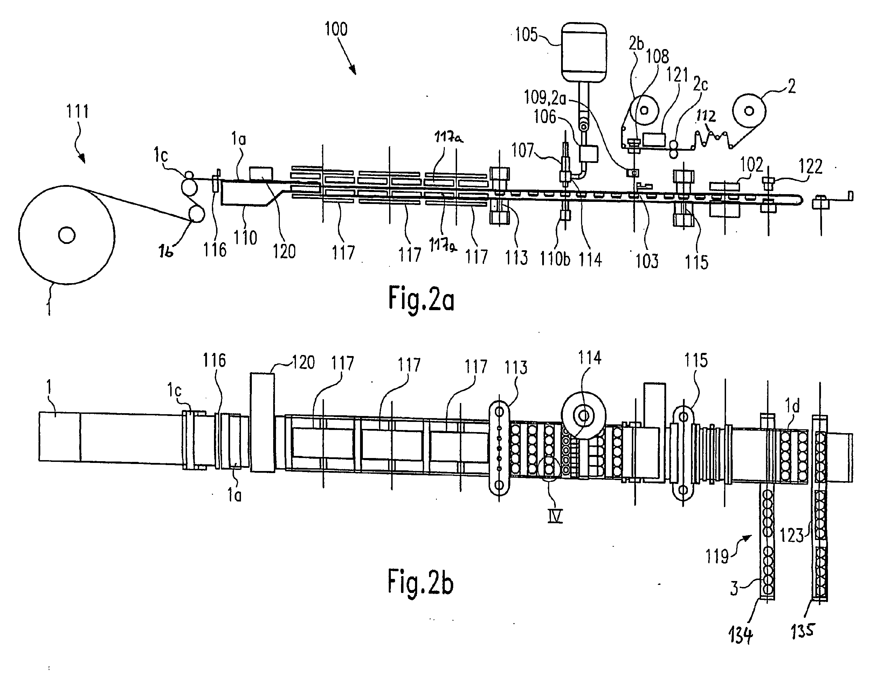

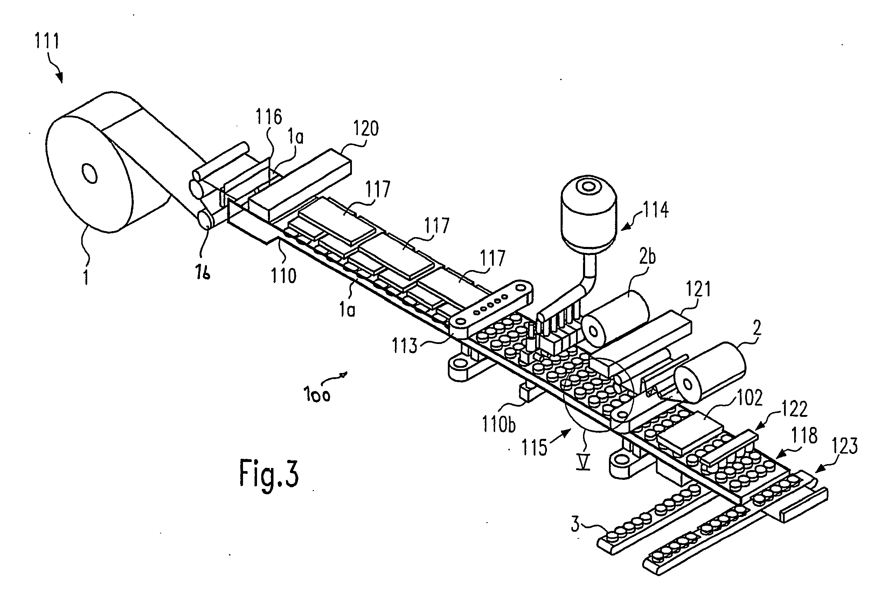

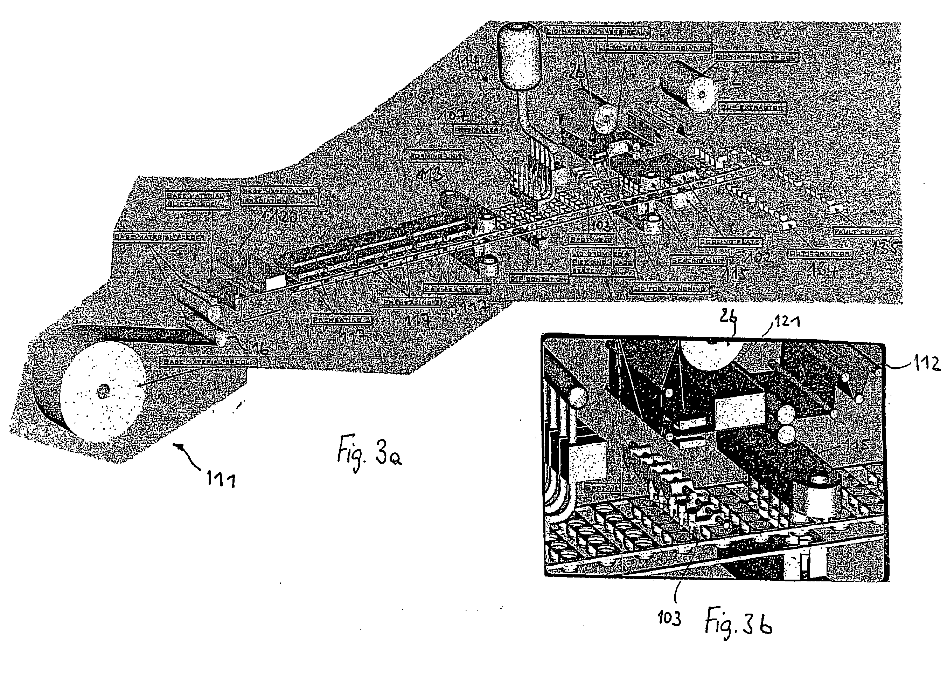

A quasi-endless basic film 1, i.e. a sufficiently stable and deep-drawable packaging film, preferably made of the thermoplastic resin, which is preferably supplied in the form of a roll and which is supplied by a first feed means 111 as a starting material for the packaging containers 3 to be produced, is separated into individual film pieces 1 a directly after the feed means, said feed means 111 including also a conveying means 1 c, as can also be seen from Fig. 2a, 2b and 3. For separating the basic film 1, a separating station 116 is used, which precedes all the other stations so that individual film pieces or sections, instead of endless films, are processed in the continued process. Preferably the film pieces 1 a have a rectangular shape with the sides of the rectangular format being disposed perpendicularly to the travelling direction of the film pieces 1 a through the manufacturing line.

The individual film pieces 1 a are advanced separately from one another to the additional treatment stations by a conveying means 110, the film pieces being held and positioned on said conveying means 110 by holders. The conveying means 110 is preferably implemented as a conveyor chain 110a or conveyor belt or as a group of synchronously circulating parallel conveyor chains or belts taking up and supporting each film piece 1 a in the area of its two edges extending at right angles to the conveying direction.

For example, from a reel of basic film 1 as the container forming material, said basic film is supplied into the container manufacturing process and respective machinery as shown in Figs, 2, 3, 6 and 7, wherein this reel of basic film 1 has a width that is required by the production capability (capacities) of the machine and a thickness that depends on the size and the tolerance (sufferance) that the containers need to have. The size and width of the machine and of the basic film 1 depends on the number and the dimensions of the packaging containers the process machinery will form during each step of the manufacturing process.

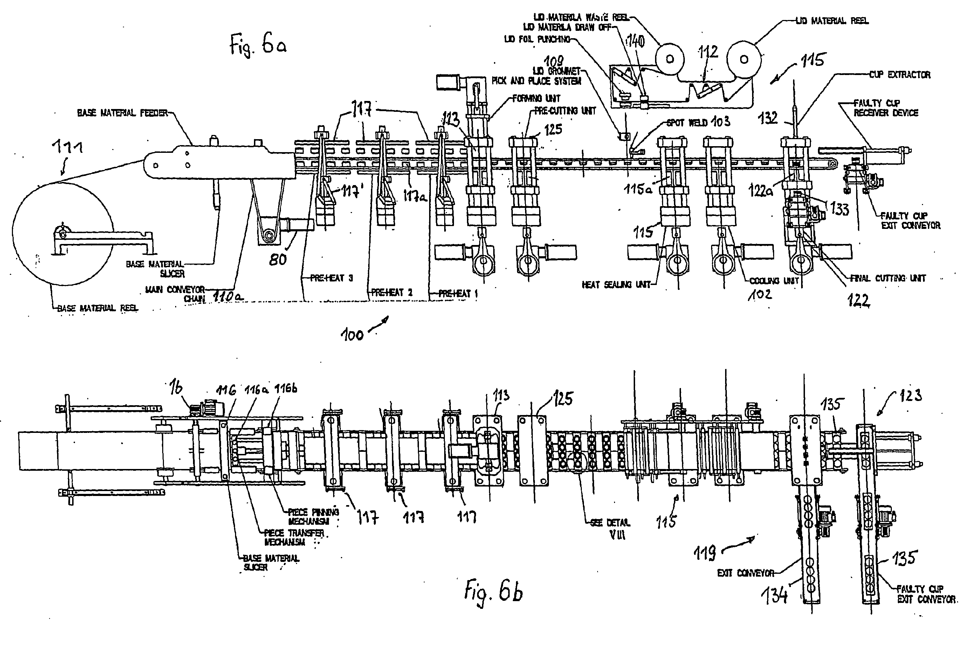

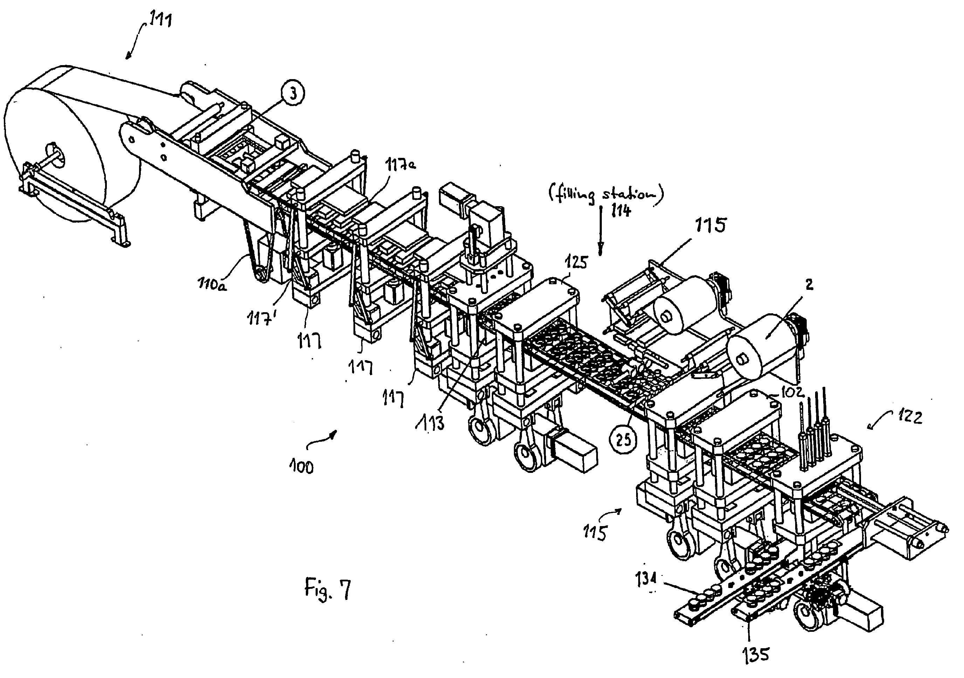

Referring not only to Fig. 1 but also to the first and second embodiments of Figs. 2a, 2b and 3 (including Figs. 3a and 3b), as well as referring simultaneously also to the other embodiment of Figs. 6a, 6b and 7, the description following hereinafter refers to all of said figures selectively without giving specific notice to the respective figures always.

Thus, these figures show the manufacturing line in two embodiments with the sequence of stations schematically should always be looked upon in conjunction with the proceeding description.

It is shown in the afore-indicated figures a roller feed mechanism 1 b is provided to supply the basic film 1 under tension from the reel 1 towards the further processing, in particular with a precision mechanism, i.e. in a precise metered way (in particular under the use of a respective servo-motor) to the separating station 116 or the basic film material slicer where the basic film 1 is cut vertically into the respective film pieces 1 a having a size (in particular width in the travelling direction of the film piece 1 a according to the container diameter or other container dimension - in one or a plurality of rows or in a staggered arrangement - and length perpendicular to the travelling direction of the film pieces through the production line determined by the number of packaging containers required. Accordingly, a piece transfer mechanism 116a (see Fig. 6b) then takes the individualized film pieces 1 a and conveys them onto the conveyor chain 110a of the main conveying means 110 utilizing a piece pinning mechanism 116b for temporarily fixing the film pieces 1 a onto the conveyer chain 110a. Said conveyor chain 110a having pins and travels along the length and on both sides of the machine frame in guide rails under the drive of a precision motor 80 (see Fig. 6a).

For positioning and orienting the individual film sections 1 a, the conveyor belts or conveying chains 110a of the conveying means 1 c may be provided with projections plus recesses, clamping means (such as conveyor-based spring, biased pairs of claws or grippers) to fix the film pieces 1 a on the conveyors or the like. The orientation and synchronization of the film pieces on the conveying means or the conveying belts of the conveying means relative to one another can be effected in a cam-controlled manner or in an electronically-controlled manner by means of process monitoring systems (in particular, using individual servo-motor drives).

When the individual film sections 1 a have left the separating station 116 according to the embodiment of Figs. 2, 3, they are supplied to a first sterilization station 120, where germs and the like, which may be hazardous to health, are removed therefrom preferably by exposure to UV radiation.

The sterilization can also take place at a different spot downstream, i.e. in the area preceding a filling station 114, or it can take place between these areas. Depending on the material to be packaged it is also dispensable (see embodiment of Figs. 6, 7).

Following this, the film pieces 1 a are conveyed through one or a plurality of preheating stations 117, as can be seen from Figs. 1 to 3 and 6 to 7. Preferably, three preheating stations 117 are arranged in succession so that the film pieces 1 a can be heated to the temperature preferred and required for molding, carefully and under process-specific control.

Regarding preheating of the film pieces 1 a to bring them to a temperature suited for the subsequent deep-drawing process in the downstream molding station, infrared radiation methods can just be employed as preheating structures as inductive heating or heating of the film pieces 1 a by heated gas flow. In order to perform a very controlled preheating of the film pieces 1 a as homogeneously as possible, in the current case preferably pairs of heating plates 117a disposed in the sequence of the three heating stations 117 are provided to perform direct contact to the film pieces 1 a and to heat same directly. In Figs. 6 and 7 the respective cantilever operating mechanisms are denoted by 117'. Depending of the film and film piece requirements (type and/or thickness of the film) and the velocity requirements of the process, as in the current case, the preheating of the film pieces can preferably be multiple and, in the current case, takes place in the three subsequent preheating stations 117. Accordingly, the film pieces 1a are preferably pinned or otherwise gripper laterally, so as to be conveyed on the two sides of the conveyor chain 117, while the preheating mechanisms (opposite plates 117a) open and close sequentially by means of the laterally disposed cantilevers operating mechanism 117' and heat the film pieces 1 a by direct contact. Gradually, the temperature is increased towards the way of the film pieces 1 a towards to the molding station and, by the time the film pieces reach the molding station 113 they will possess the required temperature.

Only for specific and special packaging container geometries, it may also be advantageous to provide and pronounce a local heat profile for preheating specific areas of the packaging film piece 1 a differently from other areas and, thus, to commit a locally variable operation. In such a case, control means (not shown here) are used for the entire heating tools located in the preheating stations 117 or a heating plate comprising special shapes is required or the manufacturing speed if varied. By means of using corresponding sensors, it is also possible to specifically control partial areas or individual surfaces of the film pieces 1 a as to their preheating.

In case of their difficult production task it may be also useful to combine preheating and cooling steps with respect to the basic film either upstream of the separating means 116 or, in particular, downstream thereof for local variable temperature control of the packaging film 1 or the individualized (cut) film pieces 1 a. When a multi-layer packaging film is used a separate or different heating operation may be formed from above and below just as in the present case by direct heating or, for example, also by infrared radiation.

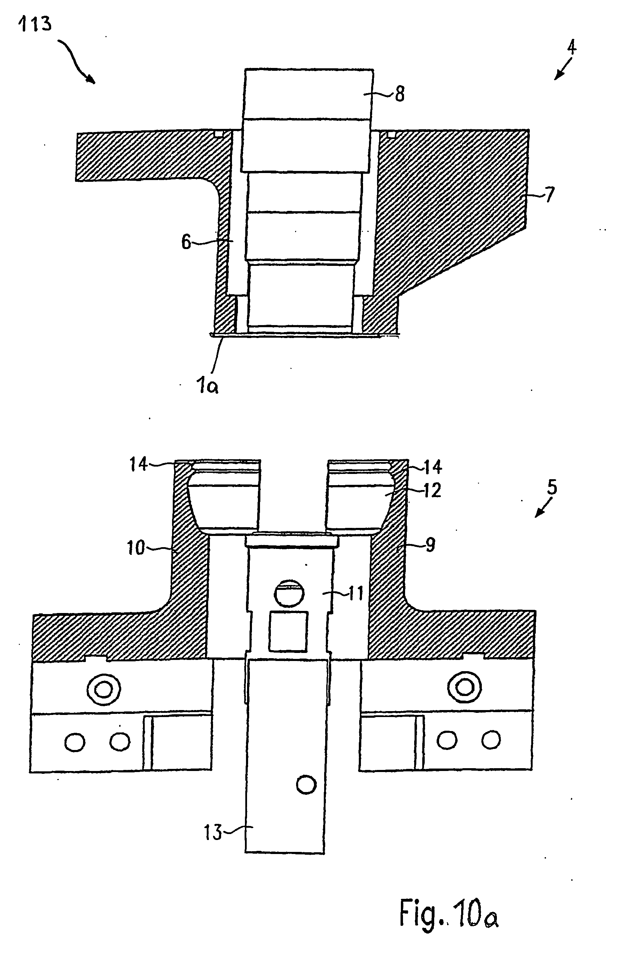

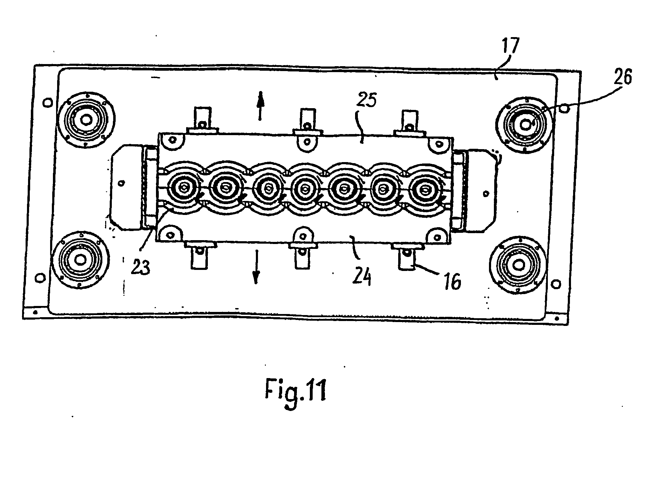

Subsequently, the film pieces 1 a are supplied to a molding station 113 where the packaging container 3 or other molded plastic parts are produced preferably by a combined deep-drawing and blow-molding, whereby it is also possible to produce packaging containers 3 having undercuts and are provided with threads and bulges, i.e., in particular container of plastic having a negative (radially inwardly convex) and positive (radially outwardly concave) contour. Regarding the structural design of the molding station 113, reference is made to Figs. 10a - 10e and 11.

Otherwise regarding the design of the tools (upper and lower modes) used in the molding station 117 so far applicable, reference is specifically made to the applicant's prior applications WO 98/36894 and US 6,324,819 B1, which explicitly are incorporated herewith by reference. Thus, a detailed description of the deep-drawing/blow-molding tooling is considered dispensable. A decisive difference in the current system is the use of individualized single film strips or single film pieces 1 a in contrast to a continuous film web being used in WO 98/36894 or its counterpart US 6,324,819 B1.

While in the current systems as shown in Figs. 2, 3, 6 and 7, the film pieces 1 a are preferably designed to have a rectangular form with the longer sides being oriented perpendicularly to the travelling direction through the machinery and, accordingly, also the upper and lower modes in the molding station 113 as well as the cutting tools downstream thereof are oriented perpendicularly to the travelling direction of the film pieces 1a in a row, such as shown in Fig. 11, also inclined positions of the tooling with respect to the travelling direction, such as shown in WO 98/36894 might be useable in response to the shape and orientation of the respective film strip or film piece 1 a being used in the current system.

For allowing the use of different tooling and orientation thereof, a specific film piece orientation station may also be incorporated into the system (although not used in the current embodiments) if an even more precise orientation and positioning of the individual film pieces 1 a in the way through the machine is required or different types of molding or punching stations are being used which might require a different orientation of the film pieces 1 a. Specifically, when designing the production on a modular basis, such means for increased variability of the system an easy exchange of components (stations) may be useful.

Accordingly, while generally the system uses rectangular film pieces 1 a having a smaller width in the travelling direction that their length extends perpendicularly thereto (for forming a plurality of packaging containers) different shapes and orientation of the film pieces 1 a during their way through the machine are possible.

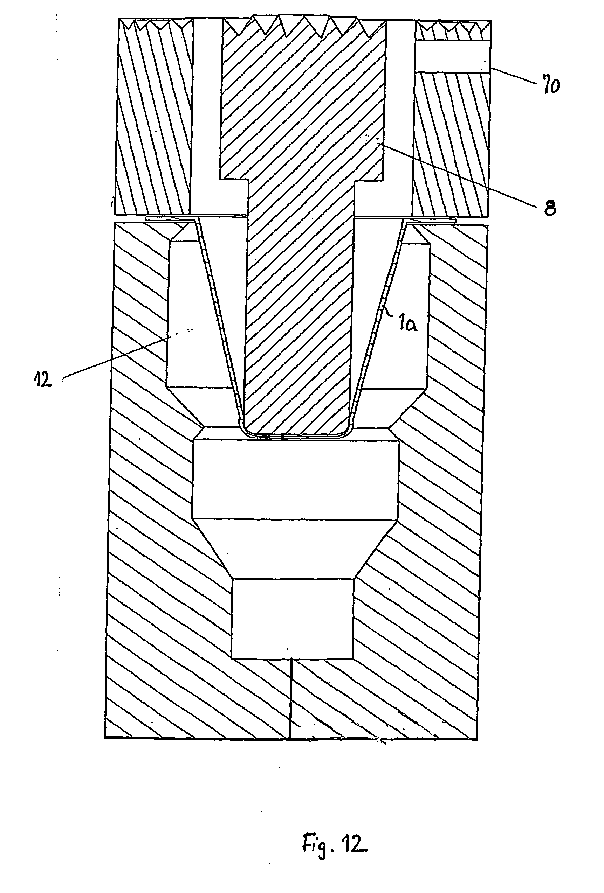

Accordingly, when the respective preheated film piece 1 a reaches a center of the molding station 113, a multiple cavity split mold (the cavities are being disposed in a row as, for example, shown in Figs. 2a, 2b, 3a, 3b, 5, 6a, 6b and 7) is used comprising a row or plurality of rows of mold cavity shape according to the desired shape of the packaging container 3, is lifted and holds the preheated material inbetween a counter plug 11 and an upper plug 8, as explained with respect to Figs. 10a -10e hereinafter. In that respect, reference is also made to Fig. 12 showing schematically the shredding of a film piece 1 a in a deep-drawing process by the upper plug 8 into the mold cavity 42 prior to blow-molding occurring through introduction of pressurized air through an opening 70. Preferably, the pre-diving plug 8 is also heated and, during descending of same, stretching the film piece 1 a into the mold cavity 12 of the lower mold, clean pressurized air is being introduced from the upper mold through the opening 70, which causes the film of the film piece 1a to stick to the walls of the mold cavity and cool down.

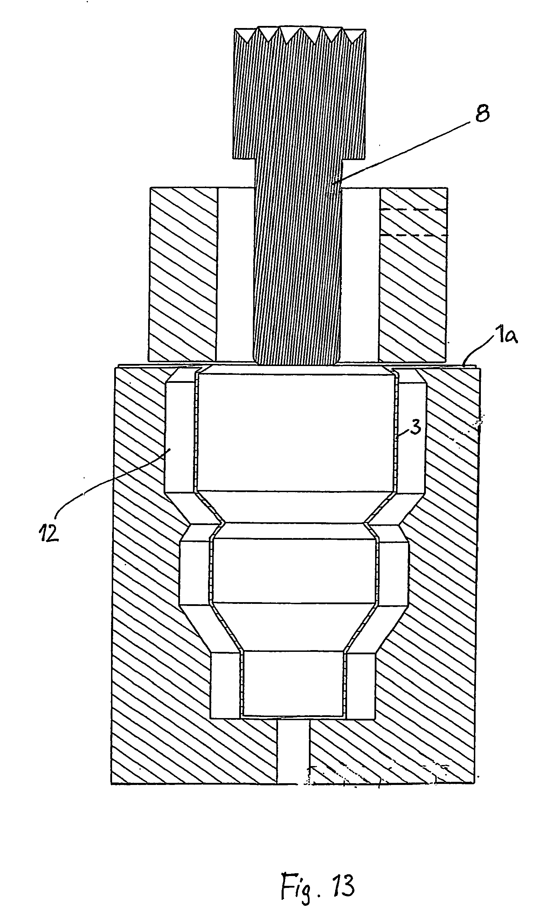

Hereinafter the introduction of pressurized air stops, the multiple cavity split-mode opens laterally and descends while the assistant plug 8 is lifted and returns to its initial position. Said position is shown schematically in Fig. 13 with the finished packaging container 3 still of course adhering to the common piece of the film 1 a. As is apparent from Fig. 13, the packaging container 3 has a plurality of undercuts which require a split and vertically movable (upwardly and downwardly) lower mold to allow releasing the semi-finished packaging container from the mold after the molding process and easy transportation through the machine along the main chain 110a in the plane of the film piece 1 a. The above process is repeated for every film piece 1 a and is performed many times per minute of the machine operation.

After the row of packaging containers from each film piece 1 a has been formed as shown in Fig. 13 as well as in Figs. 10a - 10e, the conveyor chain 110a moves the respective film piece 1 a with the formed packaging container 3 extending downwardly therefrom into a next optional station 125 (pre-cutting station), which is only there if a packaging container having an "easy opening" feature, such as a radially projecting flap 2d, to assist the opening of a film seal of the container is provided.

Therefore, the pre-cutting unit 125 is only shown for the second embodiment of Figs. 6a, 6b and 7, while said station is omitted in the first embodiment of Figs. 2a, 2b and 3 (as well as in the same embodiment according to Figs. 3a and 3b).

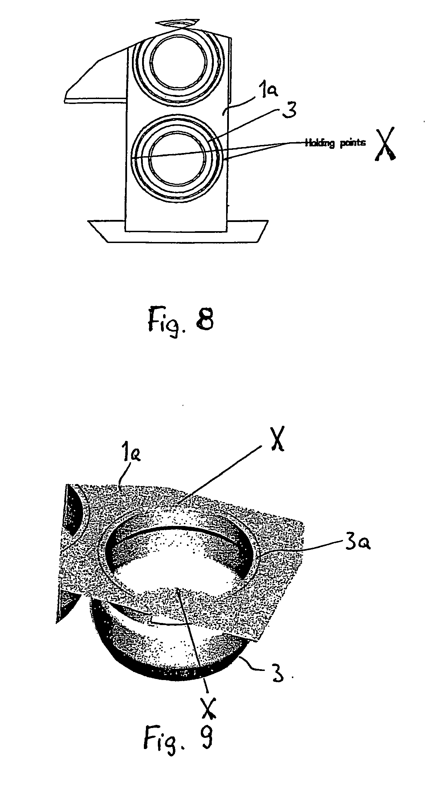

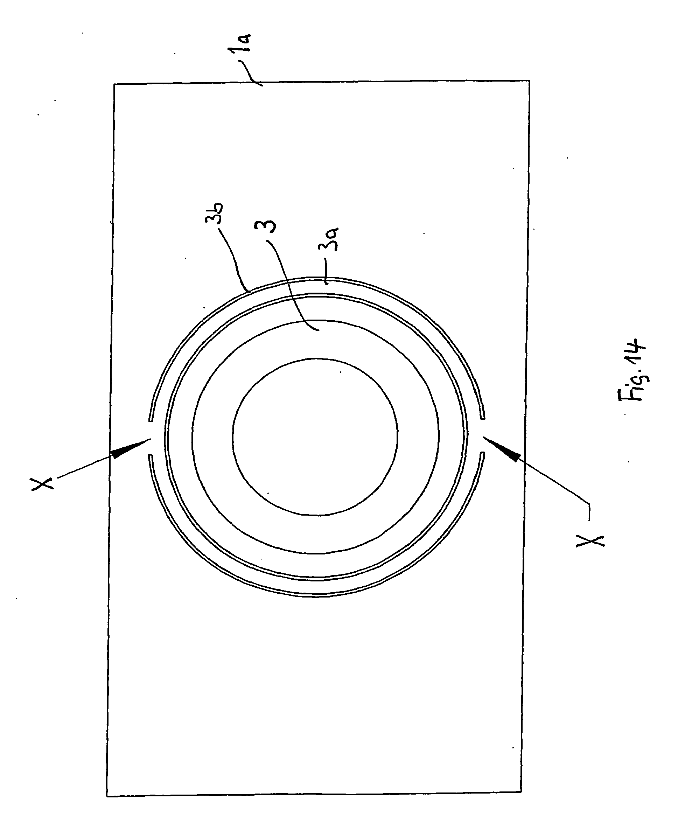

Referring, accordingly, to Figs. 6a, 6b and 7, producing packaging containers having an "opening assistant 130" (radially projecting flap 2d) as an "easy opening" feature of the respective container provided by the film seal cover from the molding station the film piece 1 a is conducted through the conveyor chain 110a into the pre-cutting station 125, which comprises a cutting tool at the upper part and a split anvil at the bottom part, both components operate together to cut the packaging container 3 from the film strip 1 a partially circumferentially along cutting lines 3b (see Fig. 14) forming a sealing rim and container edge portion, but leaving two connecting webs "X" (see Figs. 8, 9) at two small spots uncut in order to allow the packaging container 3 to remain connected to the film piece 1 a.

Said features are derivable from Fig. 14. In Fig. 14 said uncut areas are designated with "X", while 3a denotes the rim portion of the packaging container 3 arising through the pre-cutting operation as well. For ease explanation, in Fig. 14 the film piece 1a shows only one packaging container, but it is understood that normally a plurality of such containers are arranged in a row along the longitudinal edges of the film piece 1 a as shown in the other figures.

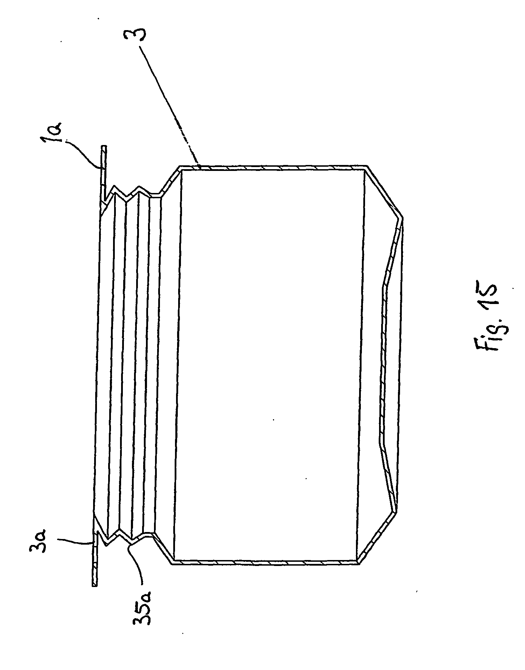

The packaging container that is shown in Fig. 14 with the film strip in plane view, in Fig. 15 is shown in cross-section comprising undercuts, i.e. radially inwardly/outwardly projecting areas, in particular provided also in the area of a thread 35a adapted for fixing a reusable or recloseable screw cap or screw cover thereon in addition to a sealing film which is to be attached to close the upper opening of the packaging container and will be sealed to the sealing rim portion 3a as explained hereinafter.

As mentioned above, if the packaging containers 3 are not required to have such a radially projecting flap or "easy opening" feature to assist removing of a sealing cover film from the packaging container, the pre-cutting station 125, as shown in Figs. 6a, 6b and 7, is not present and, as shown in the first embodiment of Figs. 2a, 2b and 3, the packaging containers, from the mold station 113, would be directly provided to the filling station 114.

When one or a plurality of molded parts, in particular packaging containers 3, which are shown e.g. in Fig. 6a to 6c, have been produced from each film piece, the packaging containers are filled with the material to be packed 104 in the filling station 114.

For this purpose, the material to be packed, which may also consist of a plurality of different individual articles, is supplied from a storage receptacle 105 via a system of conduits to a dosing and/or mixing device 106, which will then supply said material via filler nozzles 107 to the individual packaging containers 3 to be filled. It goes without saying that, for filling the packaging containers with successive layers (e.g. pudding and cream), a plurality of the above-described filling means may be arranged in succession in said filling station 114. Imaginable materials to be packed are liquid as well as solid materials (e.g. yoghurt and Muesli), which may also be filled into separate areas of a packaging container.

According to preferred embodiments of the type shown in Figs. 2 to 7, a plurality of packaging containers or other molded plastic parts 3 is formed from each film section 1a in the molding station 113; said packaging containers and molded plastic parts may be identical in shape and size or they may also vary from one another. The present packaging containers are preferably arranged in juxtaposed relationship in a row, said row extending at right angles to the conveying direction of the conveying means 110. This has the advantage that a plurality of packaging containers 3 can be produced, filled, closed and subjected to further processing at the same time. The formation of only one packaging container from a film piece 1 a is, however, just as easily possible as the formation of 2, 3, 4, 5, 6, 7, 8 or more packaging containers in juxtaposition. In the embodiment shown, each film piece 1 a comprises, however, only one packaging container 3 in the conveying direction. In principle, it is, however, also possible to arrange a plurality of packaging containers in succession or to arrange them diagonally relative to the conveying direction or in a staggered way within the conveying areas of neighboring container rims in the preceding row.

In order to guarantee exact positioning of the individual packaging containers 3 with regard to the filler nozzles 107, each film piece 1 a can be oriented with the aid of a positioning means, as has already been described hereinbefore. As can be seen from Fig. 2 to 4, it is, however, also possible to check each packaging container individually with regard to its position, to orient it and to hold it at the position in question.

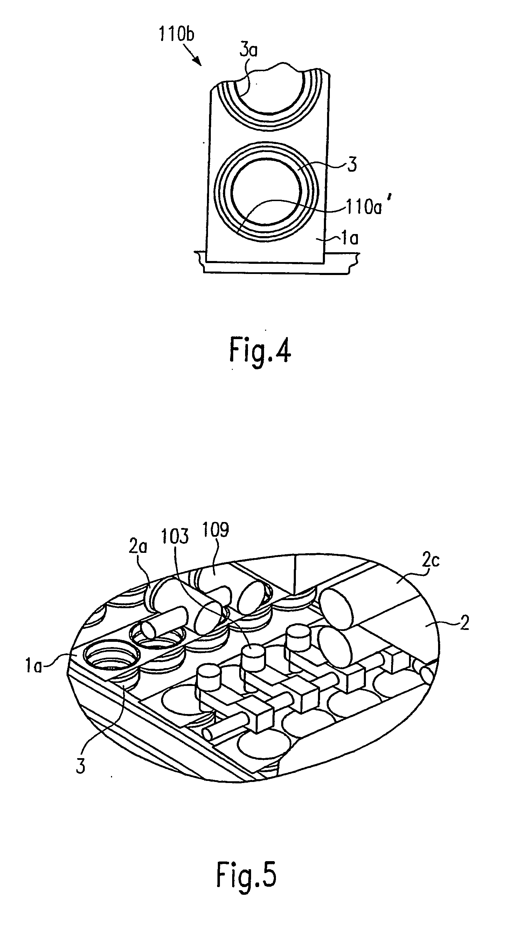

For this purpose, a separate container positioning and holding unit 110b is provided, which approaches the containers preferably from below in the area of the filling station 114 and fixes them at a plurality of positioning points 110a', as can be seen in Fig. 4, while the packaging containers 3 are being filled. Such devices 110b can, additionally or alternatively, also be provided at the subsequent stations.

It is respectfully noted that the filling station for ease of explanation and also with respect to the complex other neighboring systems which form the actual center point of this invention, has been omitted in the second embodiment of Figs. 6a. 6b and 7, but has only been shown in conjunction with the first embodiment of Figs. 2a, 2b, 3, 3a and 3b.

Of course, it is self evident and understood that after the pre-cutting station 125 in Figs. 6a, 6b and 7 and upstream of the sealing station thereafter a filling station would be provided similar to that one explained in conjunction with the first embodiment of Figs. 2a, 2b and 3. In Fig. 7 only a general reference to provision of the filling station is made.

When the packaging containers 3 have been filled in the filling station 114 they are supplied by the conveying means 110 (conveyor chain 110a) to the next station, which is a sealing station 115, where a closing material, i.e. a sealing film, chosen according to the needs of the packaged product, is placed in a reel so that the this sealing film 2 is also supplied in the form of an endless film via a second feed means 112 with the aid of conveying means 2c, which is then preferably freed from germs by means of a second stablization device 121 (not shown in the second embodiment of Figs. 6, 7).

Depending on whether a lid is required for the individual packaging container 3, which has a radially projecting flap as an opening assistant or whether the containers are simply to be closed along their sealing rim portion 3a by a sealing film, two different procedures are chosen with respect to the closing of the containers and the supply of the respective sealing film (grommets or closure portions).

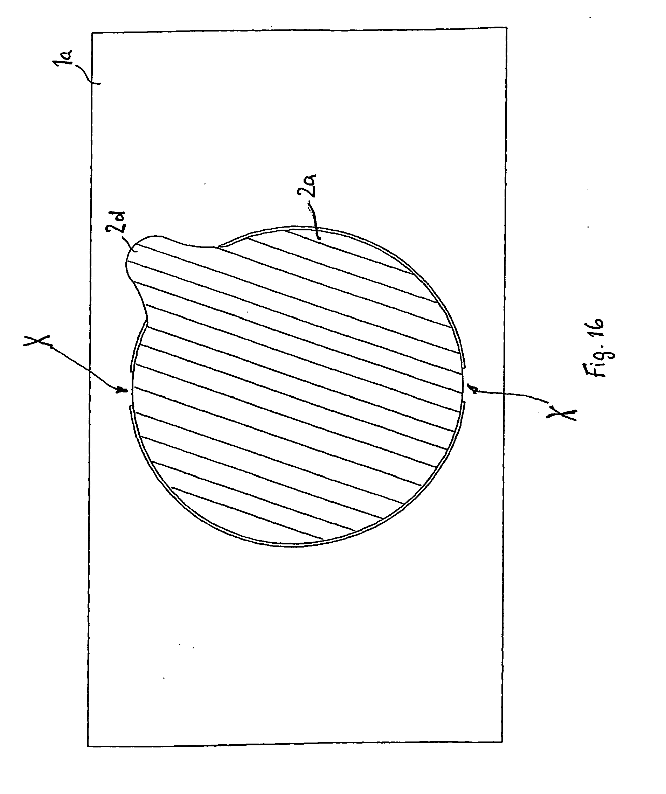

Incorporated in the sealing station 115 downstream of the second feed means 112 is disposed a supply mechanism 140 (see Fig. 6), which feeds the sealing film material with great accuracy in the steps to a punching station or cutting tool 108 where lid grommets, i.e. covers with the "easy open" feature, i.e. a regularly projecting flap 2d as shown in Fig. 16 are being cut, while another mechanism which is based on vacuum sucking action and designated with 109 as a take-up and transfer system picked up the punched out cover portions 2a (having the "easy opening" feature) and places same with high precision onto the filled containers, i.e. along the rim portions 3a thereof. Regarding a packaging container adapted for placement of the cover portion 2a having the radially projecting opening flap 2d, said cover portion 2a being placed on the rim portion of the filled packaging container 3 (still adhering to the film piece 1 a) at the two opposite , bridging web portions X (uncut), such container 3 is shown in Fig. 16.

While this procedure can of course also apply to containers having no "easy opening" feature, i.e. are simply to be closed by a circular or otherwise adapted sealing cover (without a regularly projecting flap) precisely placing said cover portions 2a on the filled and precisely prepositioned packaging containers 3 (as shown in detail view in Fig. 5), in the present case such a procedure is determined for such sealing cover portions having a regularly projecting flap as an easy opening feature (see also Figs. 8 and 9 showing the respective partially cut packaging containers schematically).

In either way, all cover portions 2a for packaging containers 3 of a film section 1a are attached, preferably simultaneously.

It is, in an alternative way of action, however, preferred currently that packaging containers 3 which do not have an "opening assistant", i.e. no regularly projecting flap from the sealing cover portion or other "easy opening" feature, the cutting tool in the punching station 108 would not cut the sealing film 2 in grommets or punched out cover portions 2a of predetermined shape adapted to the sealing rim portion 3a of the respective container but would cut the sealing film 2 in strips which have the same dimensions as the film pieces 1 a. The take up and transfer mechanism 109 would then place each sealing material strip onto the corresponding piece of container film 1 a and, to secure the sealing film strip onto the film piece 1a , spot welding would take place in order to avoid inadvertent misplacement between the sealing film strip and the film piece 1a during the transportation to the feeding station 115 where the complete sealing of the cover portions 2a to the respective end portions of the packaging containers takes place.

When the cover portions 2a with the regularly projecting flap, i.e. the contoured cutting of the sealing strip cover portions 2a, takes place also they are attached to the packaging container peripheral portions surrounding the feed openings by means of the attaching device 103 which is preferably a spot welding device for adhering the cover portion to the peripheral rim of the container at one or several points of the edge of the feed opening. Accordingly, the cover portions or lid grommets also cannot be removed or inadvertently displaced on their travels until the film piece 1 a arrives at the sealing station 115 which provides a complete air tight sealing along the respective container rim potion 3a. In this case, this station utilizes a device with splitted bottom "jaws" 115a as displayed in Fig. 6a which hold (support) the packaging container 3 from a bottom part of the container rim portion 3a and a sealing head provided in the upper part of the tooling for the sealing of the packaging container 3 according to the specifications of the packaging materials. That sealing operation can be a hot or cold sealing operation performed by application of temperature and/or pressure or can preferably also be done by an ultrasonic welding system. All methods which lead to an airtight sealing and pressure of the sealing opening of the respective packaging container 3 filled with the material to be packed are usable.

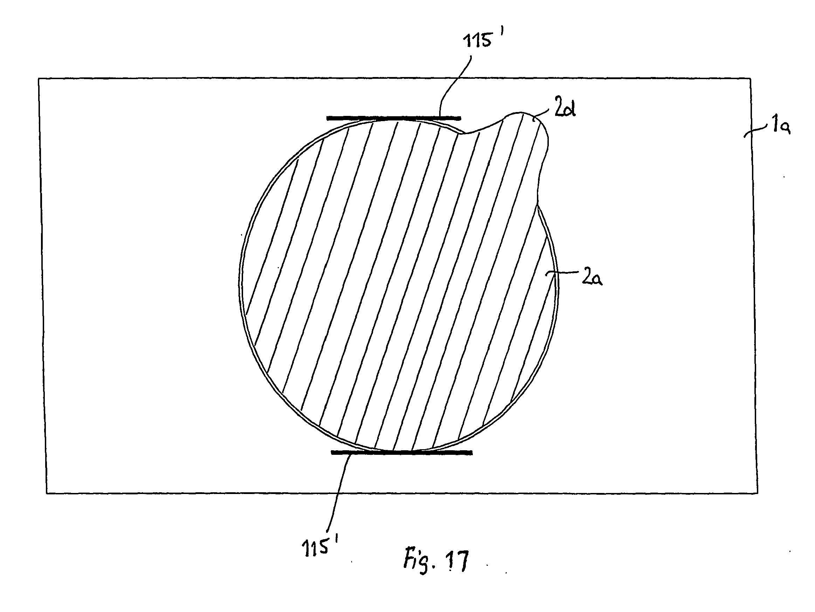

Then, the packaging containers (which are still connected to the film piece 1 a by the two uncut bridging webs "X") are shifted to a final cutting station 122 which may simultaneously be considered as being a discharge or ejection station where from the bottom part split "jaws" 122a precisely hold the packaging container 3 and lead them to the upper part of the cutting tool therein, where the cutting tool cuts the two bridging web portions "X" where the packaging containers are still attached to the film piece 1 a, said aspect being schematically shown in Fig. 17 with symbolized cutting knives 115' cutting the two so far uncut areas of the pre-cut packaging container 3.

At the same time, a cup extracting device 132 (see Fig. 6a) descends from above and picks up the finally cut packaging container 3 using vacuum and, after the bottom "jaws" 122a have opened, places the packaging container underneath the cutting tool at a position 133 where another conveyor system, such as a conveyor belt 134, is disposed for transporting the ready containers (formed, filled and sealed) out of the machine. Said exit conveyor 134 is specifically shown in Fig. 6b.

The remaining film piece or strip material (scrap material) after the containers have been removed is still pinned or otherwise grasped at the conveyor chain 110a (at both sides of the machine) while at the turning point of the conveyor chain 110a, designated with the reference numeral 135 in Fig. 6b, the film piece or strip in conjunction with the conveyor chain 110a reaching the end of the machine and starting to descend in order to rotate towards the return path the remainder film piece 1 a loses from the chain pins or other holding means like prebiased claws and is detached.

For the other types of packaging containers, which are preliminarily covered from above by a strip-like sealing film closure corresponding to the design and shape of the film piece 1 a, after that sealing film strip having being spot welded or provisionally attached to the film piece 1 a the conveyor chain 110a transports the packaging containers 1 a fully connected to the film piece 1 a yet (i.e. not being pre-cut), also to the cutting station 122 as indicated above, the cutting tool cuts out the packaging containers from the film piece 1 a circumferentially and detaches them from the scrap material, that means from the remaining film piece of the basic film strip 1a. In the same way as described before, simultaneously the extracting tool 132 lowers and picks up the packaging container 3 and places them onto the exit conveyor 134.

In the manufacturing line, at different spots but specifically at the end where the formed filled and sealed containers are to be transported out of the manufacturing system, a quality control sensor means (not shown in detail in the drawings) is disposed to remove faulty containers which are then put on a separate faulty cup exit conveyor 135 disposed further downwards of the cutting station 122 and the exit conveyor 134 as shown in Figs. 6a and 6b. As shown therein, if quality control in the course of manufacturing process already reveals a defect with respect to one or some of the containers to be formed from one film piece 1a, the whole film piece 1a is discarded and not further processed by intermediate steps.

The method and manufacturing system for producing undercut packaging containers of plastics also allows in a unique way the manufacturing of containers allowing the bottom part thereof to be opened, i.e. to be provided with a sealing film, and, for example, a reusable cover attached thereto which leads to the effect that the original upper side, in use of the packaging container, becomes the lower side (which remains closed by the sealing film apparently) while the former bottom side of the container (during its manufacturing) is adapted to be opened and used for taking out the material to be packaged and eventually to be re-closed in that area by a reusable, for example screw cap or snap fit cap ("reverse forming").

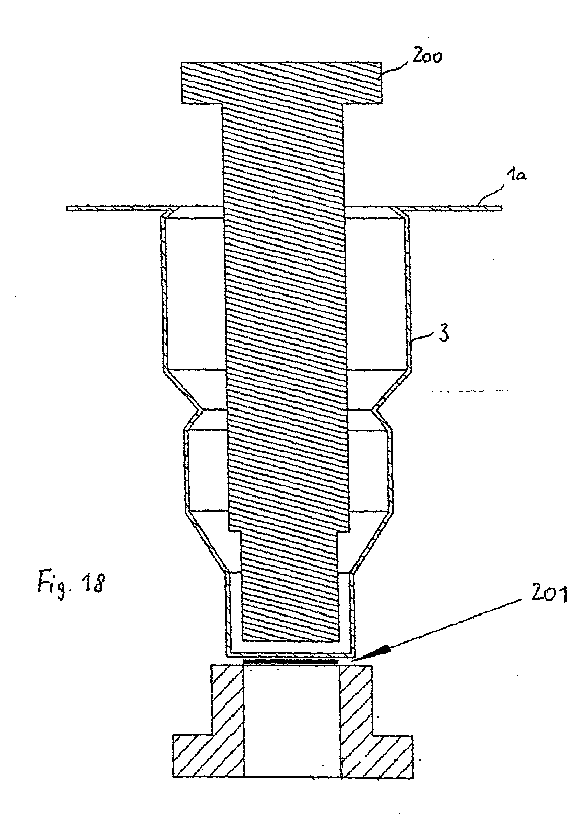

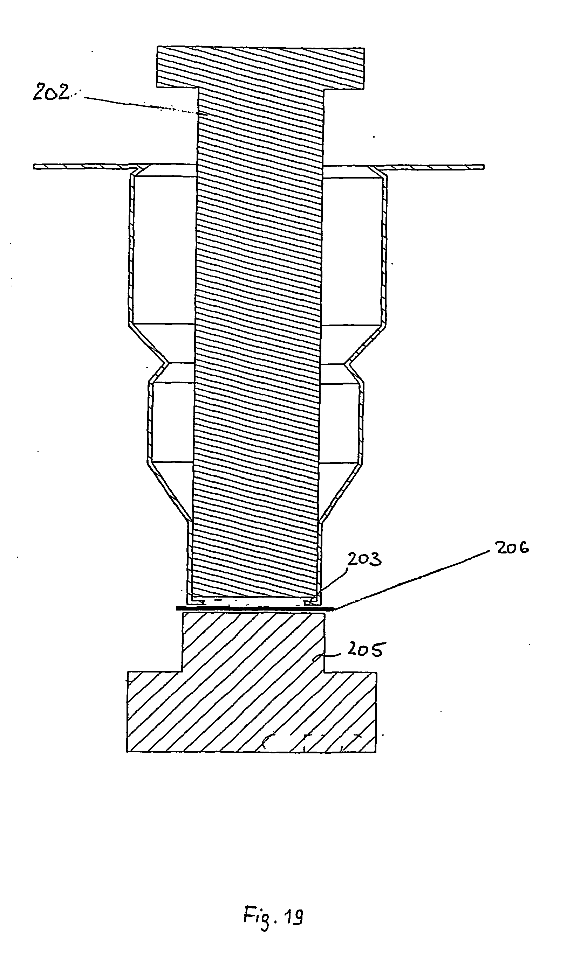

For producing such type of packaging container, reference is once again made to the above provision and description of a pre-cutting station 125. If the packaging container requires cutting and sealing at the bottom part of the forming of the packaging container, a cutting tool 200 (see Fig. 18) is descending to the respective bottom part and cuts or strips a radial grommet or bottom portion 201. Thereafter, as shown in Fig. 19, an anvil 202 is descending to the bottom part of the packaging container and holds the uncut container edge while from underneath the packaging container 3 a sealing tool 205 is lifted which provides the sealing of the bottom opening of the container 3a via a single sealing film piece or a continuous sealing strip (for a plurality of containers) 206.

Figs. 18, 19 only show this purely schematically.

Of course, additionally there can be uncut portions in that area such as threads or radially projecting flanges formed in conjunction with the molding of the container which would allow a screw cap, a snap fit cap or other reusable covers to be additionally and releasably attached to the bottom area of the container. By the way, the same would be possible with respect to the upper side of the packaging containers 3 which are closed by a respective sealing film and which, as shown in Fig. 15, may additionally have a thread or projecting flanges to allow a screw cap, screw cover or snap fit cover to be attached as a reusable cover which facilitates handling of such filled bags which can for example not be emptied at once but which preferably should allow to store some of the food stuff to be contained therein for later consumption.

Returning to Fig. 19, of course the sealing action there can also provide temperature and pressure related sealing, i.e. hot or cold sealing or by using ultrasonic waves for performing an airtight seal. Of course, as mentioned above, it may exclusively or additionally also allow the feeding and application of a plastic plug or cap using a reusable cover. Such a cover may also be the only closure means there, i.e. instead of the sealing film 206 also the attachment of a reusable closure cap such as screw or snap fit cap can be the only closure means at that spot. For example, such closure could be provided there in conjunction with a tear off section so that later on the cap could be easily released and again attached to the circumference or other portions of the container. By the way, in conjunction with the special technology, also crimping, of a closing film would be possible (instead of sealing), crimping for example an aluminium foil around the circumferential wall portion of the area surrounding the opening of the container. Also this applies to a bottom or upper opening (fill in opening) of said containers.

Regarding the "reverse forming" method, i.e. providing the container with a bottom opening as explained with respect to Figs. 17 and 18, the filling and sealing of the upper part of the container would appear in the same way as described for the manufacturing of containers having no opening area at the bottom part thereof. Preferably, the sealing film or closure cap forming material for the upper fill in opening may by the way also be a thermo forming material which can be thermo-formed in the sealing station 115 to be placed on the container by an upper tool 207 in a way as disclosed in Fig. 19. As is disclosed there, the cover portion 2a is designed to have a reinforced partially hollow but bottom-like structure (non-flat) to be adhered by thermal sealing to the surrounding rim portion 3a of the container 3. Of course, preferably is heatable but also other connecting technologies as mentioned above are usable (ultrasonic welding, hot and cold sealing).

In this respect, reference should be made to the fact that the cover portions 2a may well have an area that is larger than the packaging-container surface area separated from the film piece 1 a so that e.g. a tear tab is provided on the cover portion 2a, said tear tab being not supported by an area of the film piece 1 a or of the packaging container 3 formed therefrom. The cover portion 2a can in this way be tom open easily (opening assistant", "easy opening" feature, "radially projecting flaps", as mentioned above.

Due to the flexibility of the preferably used sealing film 2, such a projecting area of the cover portion 2a will neither tear off when the packaging container 3 is forced through the residual portions 1 d of the film pieces 1 a nor will the sealing be influenced thereby.

A discharge station 119 is provided as preferably last section of the apparatus 100 for producing packaging containers; in said discharge station 119 the singulated packaging containers 3 are packed in batches. However, as can be seen from Fig. 2 and 3, a product control means 123 may also be provided, which sorts out faulty packaging containers 3 separately or in a condition which they are still connected to the film pieces 1 a.

The apparatus 100 may also comprise a cover-application station 118 which applies a re-applicable cover, especially a screw cover 35 or snap-fit cover, to the packaging container 3 downstream of the sealing station 115, in particular downstream of the ejection station 122. When the re-applicable cover need not be arranged above the feed opening and need not cover the sealing film, the cover 35 may also be applied to the packaging container 3 prior to the step of filling said packaging container.

Making reference to Fig. 10a to 10e, the molding of the packaging containers in the molding station 113 will be explained in detail in the following. For this purpose, a packaging film that is dimensionally stable to a sufficient extent and suitable for deep-drawing, viz. the basic film 1, which consists preferably of a thermoplastic material, is fed and, after having been heated in the preheating station 117, e.g. by means of infrared radiation, it is formed by a combined deep-drawing/blow-molding process into a packaging container making use of the mould configuration which will be described in detail hereinbelow.

Fig. 10a shows a vertical sectional view schematically showing, also for the explanation of the method of producing a packaging container 3, an upper mould 4 and a lower mould 5, which are essential parts of the molding station 13 for forming the packaging container 3 through a combined deep-drawing/blow-molding process of the packaging film 1.

In a recess of a receiving body 7 of the upper mould 4, which recess simultaneously serves as a compressed-air chamber 6, a preferably stepped plug is guided in a vertically movable manner such that the compressed-air chamber 6 is available as an annular chamber between the plug 8 and the receiving body. The receiving body 7 is arranged stationarily.

Although this is here not shown in detail, the packaging film 1, in particular the thermoplastic film, which may also have a multilayered structure and may be flamed, lettered, decorated, perforated (in one or a plurality of layers in each case) and may be subjected to respective pretreatments for product identification, is heated in the preheating station 117 before it is introduced in the molding station 113. The packaging containers can also be given a respective design after the molding step.

For the purpose of heating, infrared radiation methods can just as advantageously be employed as inductive heating or heating of the packaging film 1 by a heated has flow. In general, the packaging film 1 should be preheated as homogeneously as possible.

Only for specific and special packaging container geometries (simple shapes) it may also be advantageous to provide a pronounced local heat profile for heating specific areas of the packaging film 1 and for permitting locally variable heating.

For this purpose, control means are used for the entire heating tool located in the preheating station 117 or a heating plate for special shapes or for increasing the manufacturing speed. By assigning suitable sensors, it is also possible to specifically control subareas and individual surfaces of the packaging film with regard to their preheating.

For difficult production tasks, it may also be useful to combine the packaging-film heating and cooling steps for a locally variable temperature control of the packaging film 1. When a multilayer packaging film is used, separate or different heating steps may also be executed from above and below, e.g. in particular by infrared radiation.

The lower mould 5, which is shown in Fig. 10a in the open condition (the mould in its entirety, which comprises the upper and lower moulds 4, 5, being shown in the open condition as well), comprises two laterally movable lower mould halves 9, 10 as well as a counter plug 11 defining at the bottom side thereof a preferably rotationally symmetrical mould cavity 12, the rest of said mould cavity being defined by the two lower mould halves 9, 10. The counter plug 11, in turn, is supported via a bearing body 13 and can also be vertically movable. In the preferred embodiment, the mould cavity 12 comprises undercuts 14 so that packaging containers 3 having a much greater variety of shapes and a much better standing capacity can be produced by virtue of the special design of the lower mould 5.

Although this is here not shown in detail, the lower mould halves 9, 10 as well as the counter plug 11 are preferably heated and/or cooled individually. This also applies to the plug 8 and the receiving body 7 of the upper mould. The mould in its entirety is therefore preferably made of a material having a high thermal conductivity, preferably an aluminium alloy.

Depending on the geometry of the mould cavity 12, other materials may also be used for the upper and lower moulds as well as a special, locally controlled and purposeful temperature profile inside the mould, using, in particular, local sensors whose signals are processed in an electronic control means.

Although this is here not shown, direct labelling may also be performed inside the molding station by additionally applying a label strip to the mould cavity or by inserting individual labels into the mould cavity 12 (preferably by means of a supply unit or an industrial robot). The packaging containers can also be given this kind of design in a subsequent station.

In order to guarantee a high degree of adaptation to different packaging films 1, all elements of the molding station, i.e. all the components of the upper and lower moulds 4, 5, in particular the upper plug 8 and the molding elements of the lower mould 5, can be exchanged easily and rapidly.

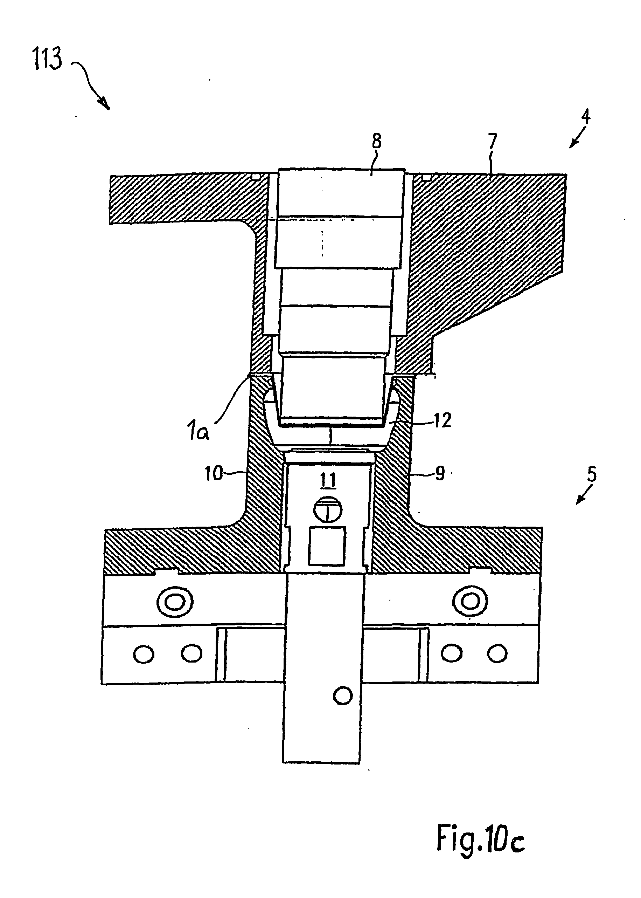

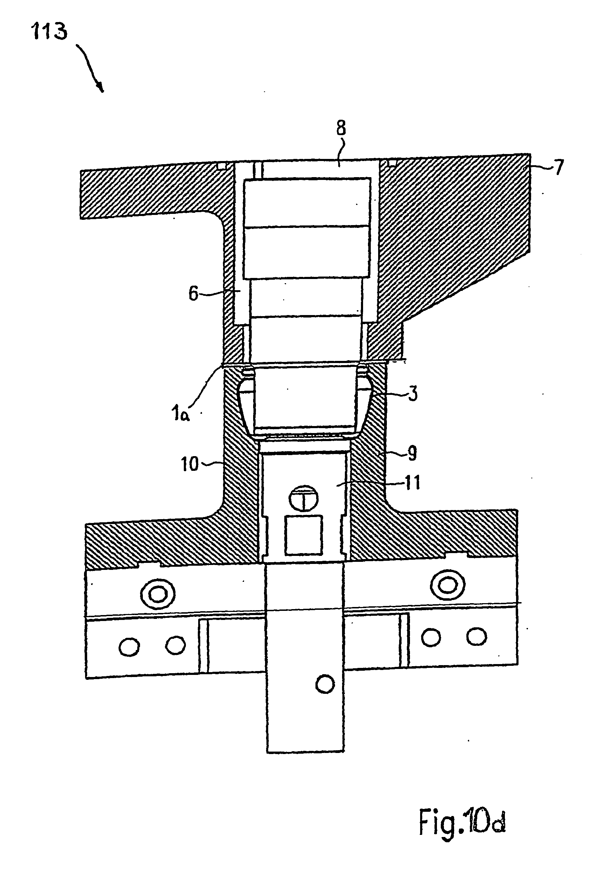

The plug material of the plug 8 and of the counter plug 11, respectively, is of particular importance to the sequence of packaging-film molding operations and to material migration inside the mould cavity; in addition, the plug geometry is adapted to the geometry of the mould cavity and a speed profile is chosen for the deep-drawing of the packaging film 1 by the upper plug 8 into the mould cavity 12. Preferably, the plug 8 (deep-drawing plunger) is controlled pneumatically. The plug speed is controlled exactly in response to the geometry of the molded packaging body to be produced. In dependence upon the necessary precision of the speed control of the plug movement, the plug 8 (deep-drawing plunger) may also be controlled by servomotors instead of pneumatic control means. The plug speed is thus greatly dependent on the plug path, i.e. on the respective immersion depth of the plug into the mould cavity with simultaneous deep-drawing of the packaging film 1 (cf. also Fig. 10c, 10d).

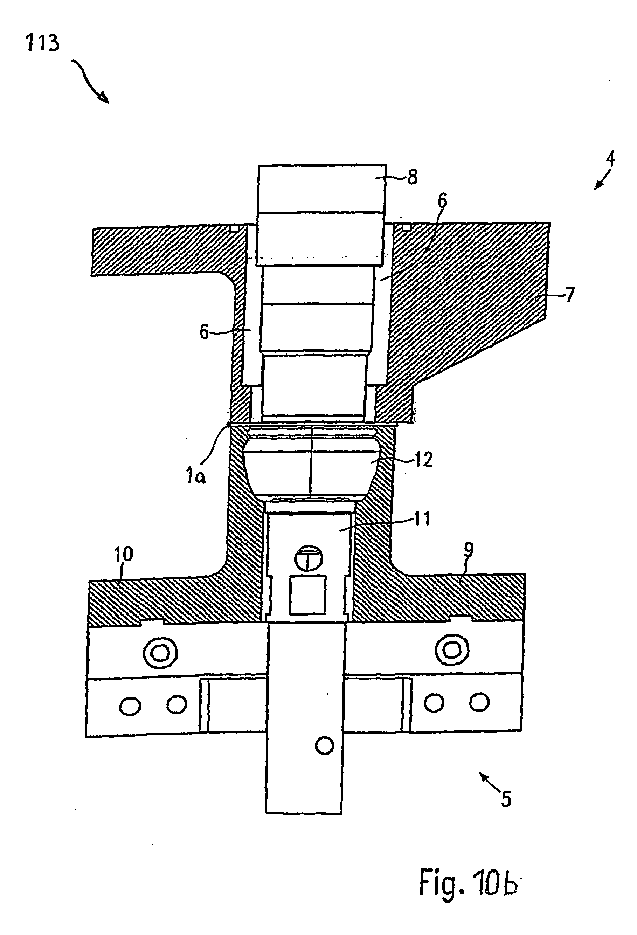

Fig. 10b shows the closed total mould comprising the upper and lower moulds 4, 5, the lower mould halves 9, 10, in combination with the bottom-side counter plug 11, defining the mould cavity 12, and the receiving body 7 being operative as a hold-down means for the heated packaging film 1. The plug 8 is shown in Fig. 10b at the beginning of the deep-drawing process (seated on the packaging film 1).

Fig. 10c illustrates a first part of the deep-drawing process of the packaging film 1 into the mould cavity 12.

Fig. 10d shows the plug 8 in its lower end position, and the packaging container 3 is formed by superimposing the end phase of the deep-drawing process with a blow-molding process by blowing compressed air from the compressed-air chamber 6 along the plug 8 into the preformed packaging-container blank; in particular, the lateral shape of the packaging container 3 is produced, and the packaging container 3 is given its final shape in that, due to the blown-in compressed air, the packaging film moves radially away from the plug 8 and comes into full-area contact with the inner wall of the mould cavity 12.

Depending on the shape in question, the plug 8 may optionally be provided with radially and/or axially adjustable elements for a widening or spreading function so that the final shape of the packaging container 3 will already be approached during the deep-drawing process as closely as possible and so that the extent to which the packaging container is deformed by the subsequent blow-molding process, or by a blow-molding process carried out simultaneously with the deep-drawing process during the end phase of said deep-drawing process, will be limited as far as possible. In view of the fact that the heated packaging film 1 is brought into contact with the wall of the mould cavity 12 of the lower mould 5 due to the air pressure (blow mould), the film will cool down there.

After the packaging container 3 has been given its final shape in the lower mould 5, the plug 8 is withdrawn and the lower mould 5 is opened, as shown in Fig. 7e.

At the same time, the lower mould is moved back downwards so that the molded packaging body 3 produced adheres in an integral material structure to the remaining packaging film 1 and can also be transported with said film from the molding station 113 into a subsequent filling station.

Due to the special mould design of the lower mould and the lateral movability of the two lower mould halves 9 and 10, the packaging container 3 may also comprise undercuts 14 without the final molding process presenting any difficulties.

Although this is not shown in the figures, the packaging container may be provided in its neck portion and also at its bottom with holding projections or other means, such as a round-thread embossing, so that a cover can be screwed on.

The plug speed, the shape and the temperature of the mould as well as the supply of air must be adapted to one another, just like the material of the mould, including the plug 8, with respect to the material of the packaging film 1.

Preferably, the plug speed of the plug 8 (and, if necessary, also a vertical speed of movement of the lower counter plug 11) is/are variably controlled via servomotors or a pneumatic control means.

The control of the plug temperature of the plug 8 may be locally variable, but is preferably kept constant. The same applies to the design and the pattern of the surface of the plug 8, the control of the mould temperature of the lower mould 5 (uniform or locally variable) and the surface design, in particular as far as the mould cavity 12 of the lower mould 5 is concerned. The air temperature of the compressed air blown in for the blow-molding process may also be subjected to special control.

Also for enhancing the production speed, it is possible to compose the plug 8 of a plurality of plugs which, when in operation, move one into the other in a telescopic fashion.

The mould cavity 12 in the lower mould may e.g. also comprise handle geometries. The molding process in this mould is as follows:
the packaging film 1 is first transported in a preheated and/or pretreated condition into the area between the upper and lower moulds 4, 5. The packaging film 1 is then stopped. Following this, the lower mould 5 and subsequently also the total mould are closed by vertically moving the lower mould and by applying the hold-down means (receiving body 7). The plug 8, whose temperature is controlled precisely (heated or cooled), is now lowered at a controlled speed, which is variably adapted to the deep-drawing process, for molding the packaging film 1 by deep-drawing into the mould cavity 12 of the lower mould 5.

In the course of this process, the packaging film 1 is only in slight contact with the lower mould 5 in the neck portion; in this area, the radial gap or distance between the plug 8 and the mould cavity 12 essentially corresponds to the wall thickness of the future packaging container 3 (film thickness) plus a certain motion tolerance. When a certain distance has been covered by the plug 8, the additional blow-molding operation is initiated, especially triggered by the plug 8, (blowing compressed air via the compressed-air chamber 6 downwards into the space between the plug 8 and the preshaped packaging film 1), whereupon the heated packaging film 1 will, due to the air pressure, be brought into contact with the wall of the mould cavity 12 where it will cool down.

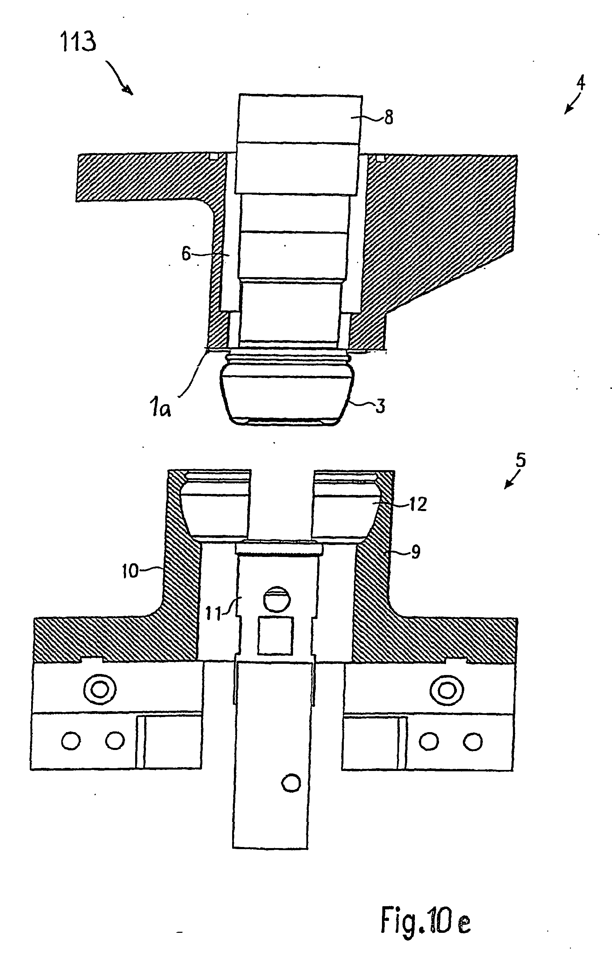

Subsequently, the plug 8 is moved back upwards and the mould is opened (including opening of the lower mould 5); the packaging container 3, which is still connected to the film material (cf. Fig. 10e), is then transported away from the area of the molding station 113 and advanced to the filling station 114.

For a space-saving arrangement of the components as regards their shape and an efficient exploitation of the packaging film 1, which is moved in the direction of transport, i.e. parallel to the longitudinal edges of the conveying means 110 and relative to the lower mould 5, it is also imaginable to arrange the molding station 113 diagonally thereto.

The angle of inclination of the series arrangement is then preferably 45° relative to the direction of movement of the respective film piece. If desired, also a several rows of such molding stations may be provided in parallel in a "gapwise" arrangement.

As a sample for the design of the lower mold with orthogonal orientation of the row of mold cavities with respect to the travelling direction of a film piece 1a (said travelling direction is indicated by an arrow), Fig. 11 once again exemplifies the disposal of the lower mold with the series arrangement of the mold cavities together with boundary cylinder sections 23 which are each connected to, preferably integral with, opposite guide plates 24, 25. Said guide plates 24, 25 in conjunction with guide rails 16 which are secured to the support plate 17 form a lateral guide device for enabling lateral opening of the split lower mold in conjunction with the vertical movement of the support plate 17 along guide columns 26 through mold engaging means of a control cam arrangement, not shown in greater detail here.

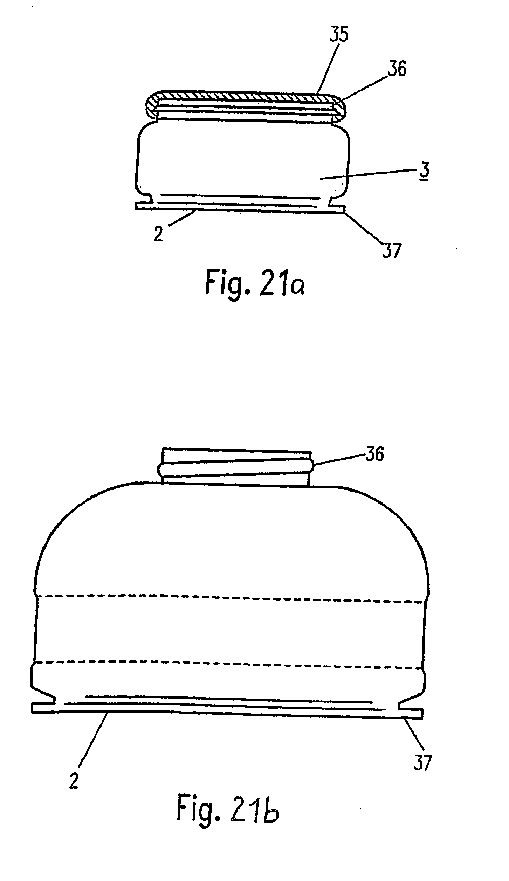

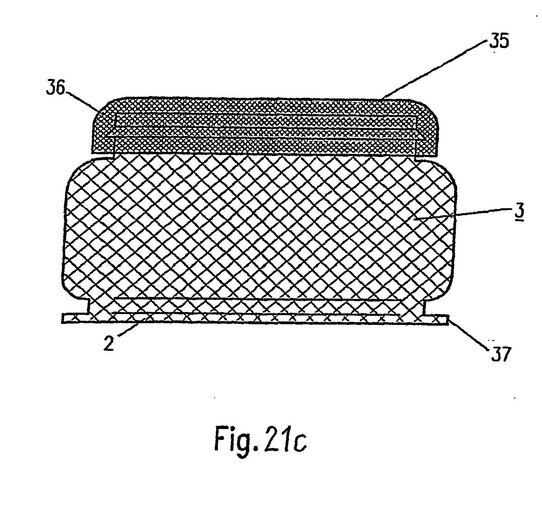

Fig. 21 a to 21 c show embodiments of packaging containers 3 which are made of a thermoplastic material and produced according to the above-discussed method and by means of the above-explained devices.

By means of the above-described method, it is possible to provide, in addition to covering the packaging container 3 with the sealing film 2, also a (screw) cap cover either on the same side as the sealing film 2 or on the opposite side of the packaging container 3. In other words, reclosable plastic packaging containers 3 can be produced in a particularly advantageous manner by the apparatus according to the present invention, and this is of particularly great advantage to the storing of residual amounts (foodstuff) in the packaging containers and can drastically increase the useful life of the packaging containers 3; this will result in a substantially lower environmental load.

Fig. 21 a to 21 e show embodiments for packaging containers 3 provided with a screwable cover 35, which is preferably made of a plastic material as well. The special feature of these embodiments is that the cover is screwed onto the former "bottom" (related to the manufacturing process) of the packaging container 3 which is provided with a screw thread 36 in this area. This means that, in the ready-for-use state, the "hot-sealing side" forms the bottom of the filled packaging container 3, whereas the screw thread 36 is circumferentially provided in the former bottom area (related to the shaping process), and the container bottom comprises an opening device, i.e. it is so pre-embossed, prepunched or otherwise weakened in its material thickness that the packaging container can easily be opened on this side so that this side constitutes the side where the user will open the packaging container and take out its content, whereas the sealing film 2 forms the bottom of the packaging container 3 which remains closed during practical use.

Fig. 21 b shows this type of packaging container 3 without a cover.

In the case described above, where the screw cover 35 is to be arranged on the same side as the sealing film (cover portion 2a) and the screw cover is to be arranged such that it extends over the sealing edge and the sealing film (i.e. the screw thread is positioned below the sealing film on the outer circumference of the packaging container), the sealing edge 3a is dimensioned as narrow as possible and a respective tear tab 2d is designed such that said tab can be bent so that it will not be in the way when the cover is screwed on. It goes without saying that also the sealing edge itself may be used as a support for attaching a further cover (snap fit) (optionally in further circumferential contact with the rest of the circumferential wall of the container).

It is also imaginable to provide sealing by means of a sealing film on both opposed sides of a packaging container 3 and/or to provide a cover 35 on both said sides.

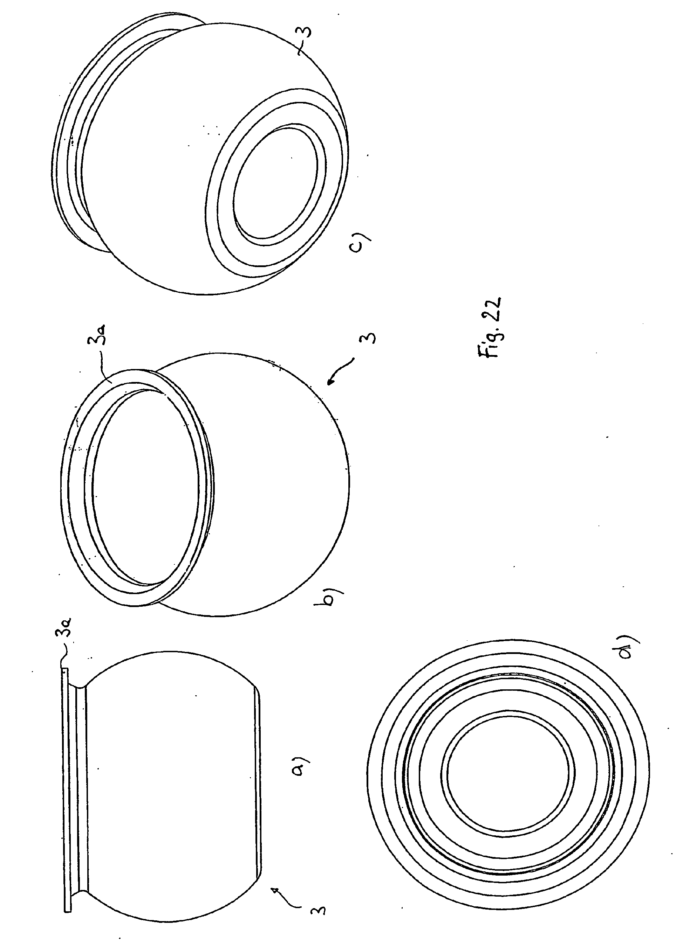

Figs. 22a, 22b, 22c, 22d show a vase-like container having an undercut area and an upper branch-like rim portion 3a which is preferably sealed with a sealing film (not shown) and can additionally serve as a snap-fit for a re-closable cover (now shown here).

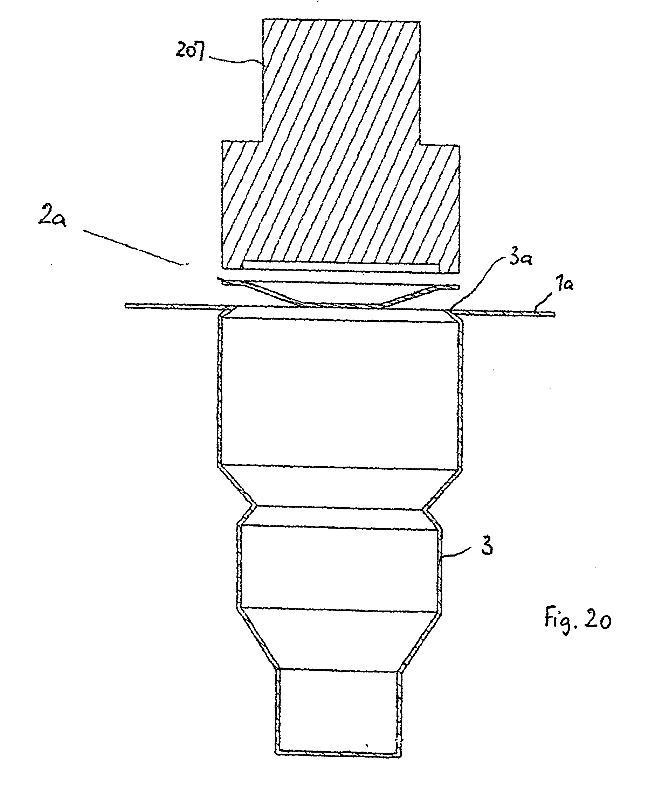

While Fig. 22a shows a front view, Fig. 22b is a perspective view on the top side, while Fig. 22c is a perspective view of the bottom side with Fig. 20d being a bottom view.

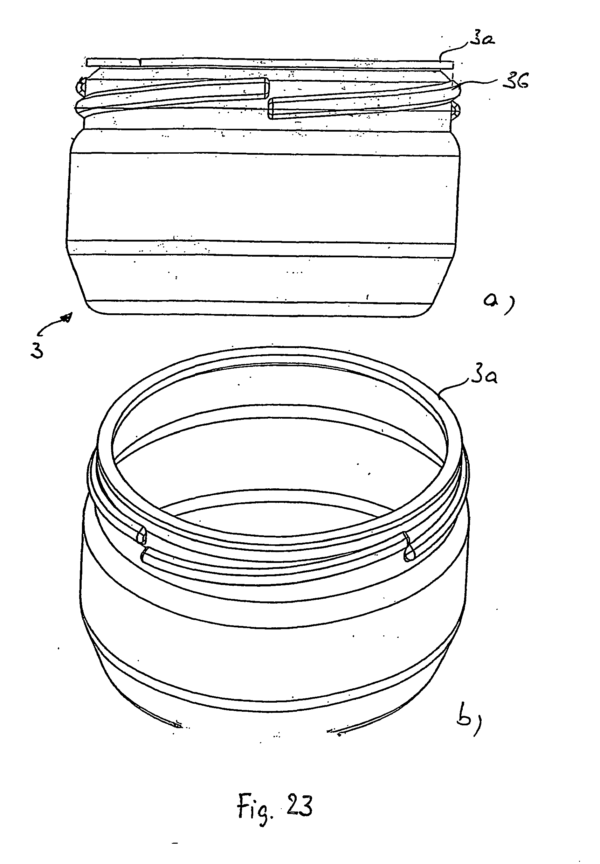

Fig. 23 shows a subject packaging container 3 with a thread 36 underneath the upper flange or sealing rim portion 3a so that such a container after the upper sealing film has been torn partially off but the container is either not completely emptied and shall be reused for other purposes can be closed by a screw cap or screw cover in a re-closable manner. Fig. 23a is a front view while Fig. 23b is a perspective view from the opening side.

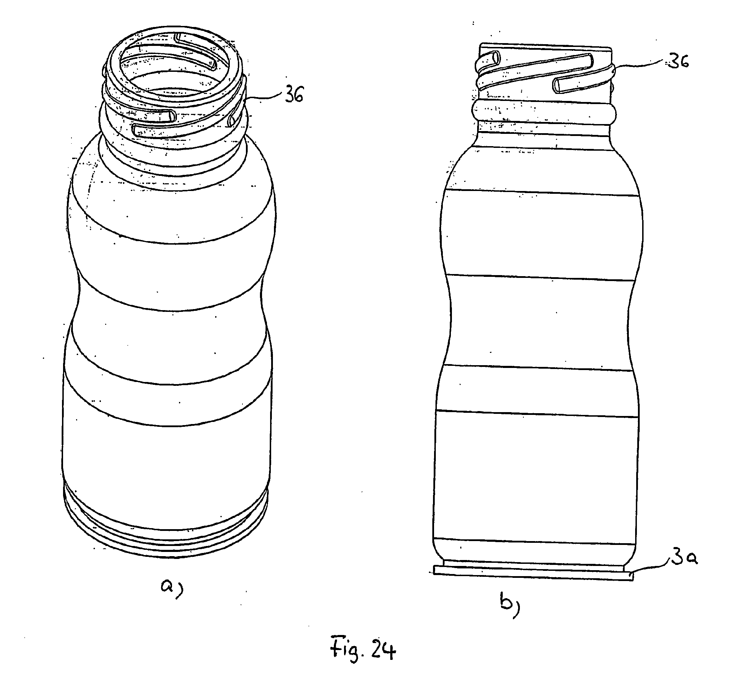

Finally, Fig. 24 shows a bottle container which, in Fig. 24a in perspective view, is manufactured according to the "reverse forming" method, i.e. explained with respect to the preceding Figs. 18 and 19, i.e. the former bottom part was punched here to form the bottle opening having an outer thread 36 to allow a screw cap or screw cover to be screwed thereon while the former fill in opening for the product and respective flange portion 3a closed with the sealing film is now the bottom portion of the bottle. Fig. 24b shows a front view thereof where the undercut portions and the combination of positive and negative contour of the bottle manufactured by such method and system as indicated above has been provided.

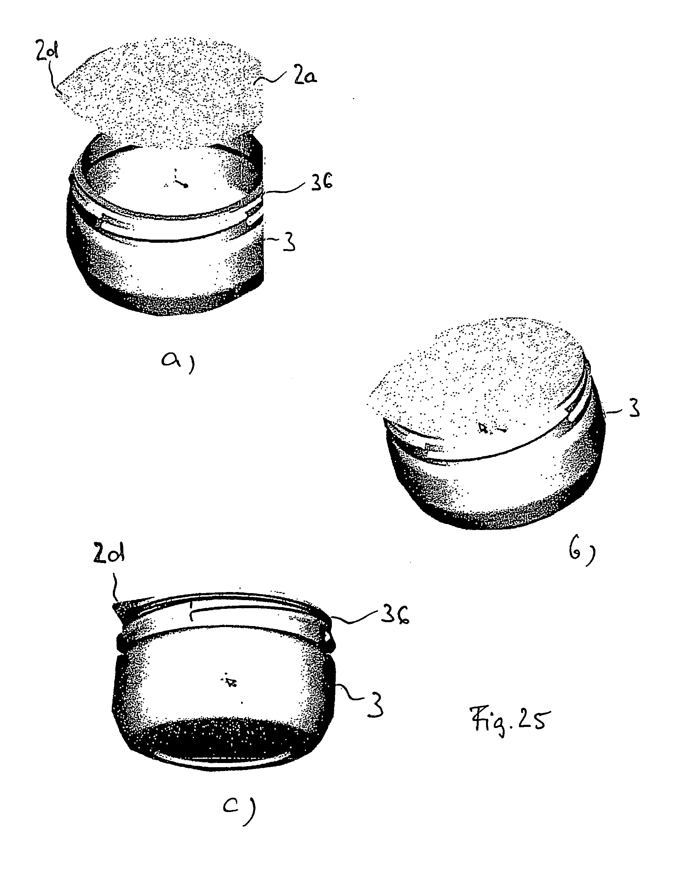

Figs. 25a-c show a packaging container with a thread underneath the fill-in opening which is going to be sealed by a film seal cover portion 2a. Said film seal portion 2a has a radially projecting flap 2d ("easy opening" feature) for easy opening of the container after removing the closure cap (not shown). Thus, the container 3 can be re-closed after partially emptying same or can be re-closed for different purposes. Of course, the thread 36 could be replaced by other closure cap holding means such as radial projections for a snap-fit cover.

## Claims

1. A method of producing packaging containers of plastics, with a basic film consisting at least in part of a plastic material being introduced into a mold comprising an upper mold and a lower mold, and the film being subjected to a molding process, wherein the basic film (1) is supplied to the mold in the form of individual film pieces (1a), each film piece (1a) supplied to the mold is first displaced by at least one plug (8) of the upper mold in a deep-drawing process into a mold cavity (12) of the lower mold (5) and a final molding process is then performed by a blow-molding operation with supply of a gaseous medium into the mold with the film (1) being placed on a wall of the mold cavity (12) formed in the lower mold (5), said basic film is unwound from a reel of synthetic resin material before being fed to a base film cutter by a feeder mechanism for precisely metered intermittent supply of the basic film (1) to the base film cutter, wherein a web of the basic film (1) prior to cutting or the cut film pieces (1a) are subject to preheating, wherein a plurality of packaging containers (3) is formed from each separated film piece (1a), said packaging containers (3) being each provided with at least one undercut and arranged side-by-side in one row, while downstream of the molding of the packaging containers from the respective film piece (1a) containers (3) having an opening assistance are partially punched assuring the packaging container to remain integral with the surrounding film piece (1a), while each packaging container is closed by a separate cover portion (2a) which has been separated from the sealing film (2), while prior to closing the packaging container (3) the cover portion (2a) is secured, after being supplied to a rim portion of the packaging container by vacuum transfer wherein after said securing of the cover portion (2a) at the packaging container (3) in a spotlight manner final sealing of the cover portion (2a) at the container (3) is provided.

2. The method according to claim 1, wherein the plug (8) of the upper mold (4) is moved over a plug path at a variable speed.

3. The method according to claim 1 or 2, wherein the gaseous medium is compressed air.

4. The method according to at least one of the preceding Claims 1 to 3, wherein the plug (8) and/or the lower mold (5) is subjected to a temperature control, in particular, is heated and/or cooled at least in part.

5. A method according at least one of the preceding claims 1 to 4 wherein, prior to forming the packaging containers (3), individual film pieces (1a) are separated from the basic film (1), the packaging containers (3) being formed from said film pieces (1a) after said separation.

6. Method according to at least one of the preceding claims 1 to 5, wherein the basic film (1) is cut into said individual film pieces (1a) having a width corresponding to at least a diameter or other dimension, in particular width, of a packaging container to be manufactured.

7. Method according to at least one of the preceding claims 1 to 6, wherein a width of the basic film (1) is selected according to a multiple diameter or width dimension of the packaging container to be manufactured to adapt to a plurality of packaging containers being produceable from the same individual film piece (1a), said packaging container being arranged side-by-side in a row, said row extending inclined, in particular perpendicularly, to the travelling direction of the film piece (1 a) through the packaging container manufacturing system, in particular a form-fill and seal machine.

8. Method according to claim 6 or 7, wherein the width of the film piece (1a) corresponds substantially to a multiple of the diameter of the packaging container to be manufactured, or less.

9. Method according to claim 8, wherein a plurality of preceding containers are manufactured from the same film piece (1 a) being arranged side-by-side along the travelling direction of the film piece (1a) and being disposed staggered with respect to a preceding row of packaging containers extending inclined, in particular perpendicularly to the travelling direction of the film piece (1a) through the packaging container manufacturing system, in particular form-fill and seal machine.

10. Method according to at least one of the preceding claims 1 to 9, wherein the basic film (1) is cut into individual film pieces (1a) having a width extending in the travelling direction of the film pieces (1a) smaller than their length extending perpendicularly to the travelling direction of the film pieces (1a).

11. Method according to at least one of the preceding claims 1 to 10, wherein the cutting of the basic film (1) into individual film pieces (1a) and the size thereof is determined by the diameter or other dimension, in particular width and the number of packaging containers requested from a certain film piece (1a).

12. Method according to at least one of the preceding claims 1 to 11, wherein the film pieces (1 a) are re-orientated prior to being supplied into the mold.

13. Method according to at least one of the preceding claims 1 to 12, wherein the film pieces (1a) are moved separately from one another along at least one conveying means (110).

14. Method according to at least one of the preceding claims 1 to 13, wherein a packaging container (3) is formed from each separated film piece (1a), said packaging container (3) being especially provided with at least one undercut.

15. Method according to claim 1, wherein a plurality of packaging containers (3) is formed from each separated film piece (1a), said packaging containers (3) being exclusively arranged side-by-side in a direction perpendicular to the conveying direction of the film pieces (1a).

16. Method according to at least one of the preceding claims 1 to 15, wherein the individually spaced film pieces (1a) are immobilized on a supporting conveyor belt or chain, or a plurality of such conveyor means disposed in parallel, in particular are pinned or put under pressure for temporary affixation as the conveyor belt or chain or are held by chain or belt supported fastening means such as spring- biased claws or grippers.

17. Method according to claim 16, wherein the conveyor belt or chain carries the film pieces (1a) under assistance of pins, said conveyor belt or chain being driven by a precision servomotor is guided in guide rails along sides of the packaging container manufacturing system.

18. Method according to claim 1, wherein the film pieces (1a) are preheated while being conveyed pinned or otherwise fixed onto two sides of the conveyor belt or chain, in particular are preheated intermittently under direct contact from both the upper and lower side of the film pieces (1a).

19. Method according to at least one of the preceding claims 1 to 18, wherein, for forming one or a plurality of packaging containers from a film piece (1a) being appropriately positioned between the upper and lower molds, said lower mold, being split to define a respective number of mold cavities corresponding to the contour of the packaging container(s), is lifted and holds the film piece (1a) between upper and lower molds, the film piece material is deep-drawn into the respective mold cavities and pushed against cavity molds of the lower mold to stick there, while after finishing of the shaping of the packaging container the split lower mold opens and descends while the deep-drawing plug is retracted into its initial position.

20. Method according to at least one of the preceding claims 1 to 19, wherein the packaging containers (3) formed from a film piece (1a) are filled with a material to be packed (104) and/or closed with a sealing film (2) before they are separated from the film piece (1 a).

21. Method according to claim 20, each packaging container (3) is closed by a separate cover portion (2a), which has been separated from the sealing film (2).

22. Method according to claim 21, wherein the area of the cover portion (2a) corresponds essentially to the area of the packaging container (3) separated from the film piece (1a).

23. Method according to at least one of the preceding claims 20 to 22, wherein the cover portion (2a) is additionally provided with a tear tab (2b) which after attaching the cover portion (2a) to the packaging container (3) projects radially from a rim portion of the packaging container (3).

24. Method according to at least one of the preceding claims 20 to 23, wherein prior to closing the packaging container (3), the cover portion (2a) provided for this purpose is secured to the packaging container (3) in a spot-like manner, especially by means of spot welding.

25. Method according to at least one of the preceding claims 20 to 24, wherein the packaging container (3) is closed by welding, hot or cold sealing or ultrasonic sealing thereto the cover portion (2a) provided for this purpose, said cover portions being preferably transferred from a sealing film supply towards the packaging containers by a vacuum transfer means.

26. Method according to at least one of the preceding claims 1 to 19, wherein the sealing film is cut into strips corresponding in shape to the film pieces (1a), followed by spot welding the respective sealing film strip to the respective film pieces (1a) comprising the filled packaging containers to close same.

27. Method according to claim 26, wherein the sealing film strip and the film piece (1 a) comprising the filled packaging containers already roughly affixed to each other along rim portions of the filled packaging containers formed are sealed air-tightly by hot or cold sealing under increased temperature and/or pressure or by ultrasonic sealing, in particular under support of a rim portion of the respective packaging container from below.

28. Method according to at least one of the preceding claims 1 to 27, wherein the packaging containers (1) closed with the sealing film are partially integral with the reminder film piece (1a), preferable cooled down and forwarded to a cutting station to cut radially at least the remaining webs yet, while the packaging containers are held under vacuum by a descending upper tool, putting it onto the conveyer belt or chain to be fed out of the machine.

29. Method according to at least one of the preceding claims 1 to 28, wherein a container quality monitoring system is provided adapted to remove faulty packaging containers out of the machine.

30. Method according to at least one of the preceding claims 1 to 25, wherein a remaining waste film piece, after the discharge of the packaging containers remains pinned to the conveyer chain or belt at both sides thereof up to the transition of an upper feed train of the conveyor chain or belt into the lower return train of the conveyor chain or belt where the remainder film piece (1 a) is unpinned from the conveyor chain belt pins and detached.

31. Method according to at least one of the preceding claims 1 to 30, wherein the packaging container comprises closing means for attaching a closure cap thereto.

32. Method according to claim 31, wherein the closure means are provided at the side of the sealing film and/or at an opposite (bottom) side of the packaging container for affixing the closure cap thereto.

33. Method according to at least one of the preceding claims 31 or 32, wherein the closure cap is connected to the closure means in a kind of a snap fit.

34. Method according to at least one of the preceding claims 31 to 33, wherein the closure cap is brought into engagement with a radially projecting circumferential projection in a snap fit and, in case of designing the closure means as a thread, is screwed thereon.

35. Method according to one of the preceding claims 31 to 34, wherein the closure cap is screwed onto a thread provided in the bottom or neck area of the packaging container, said thread being provided either below the sealing film in the neck area of the packaging container or in the bottom area thereof at an opposite side from the sealing film in the neck area.

36. Method according to one of the preceding claims 31 to 35, wherein the molded packaging containers are taken out of the molding station continuous with each other, supplied to a filling station and are filled with the material to be packed, subsequently sealed with a sealing film and the filled and closed packaging materials by means of punching in the area of a sealing rim portion are separated from each other and fed away.

37. Method according to one of the preceding claims 31 to 36, wherein said packaging containers being filled with the material to be packed and closed by means of the sealing film, additionally are provided with a closure cap, in particular screw or snap fit cap, on the side of the sealing film or the opposite side of the packaging container.

38. Method according to one of the preceding claims 1 to 37, wherein downstream of the forming of the packaging containers, in particular in the area of the precutting process being conducted at a bottom area of the packaging container being cut and sealed or provided with an area of reduced material thickness, tearing out or opening means allowing the bottom area of the container to be opened later on.

39. Method according to claim 38, wherein a sealing film comprising an opening assistant and/or sealing film re-usable cap, in particular screws or snap-fit caps made of plastic metal, is attached to a bottom opening area of the packaging container.

40. Method according to claim 39, said sealing film for closing a bottom opening cut or scribed into the bottom area of the container is hot or cold sealed under application of temperature and/or pressure or affixed by ultrasonic sealing from below using an anvil introduced into the packaging container from above as a counterpiece.

41. Method according to one of the preceding claims 1 to 40, wherein the packaging container (3) and/or the cover portion (2a) is/are lettered prior to separating it/them from the film piece (1a) and/or labeled in the course of its manufacturing or thereafter.

42. Method according to one of the preceding claims 1 to 41, wherein the respective method step, such as forming, filling, lettering/labeling, closing and/or separating of all packaging containers (3) of a film piece (1a) take place essentially at the same time for all packaging containers (3) belonging to the same film piece (1a).

43. Method according to one of the preceding claims 1 to 42, wherein each film piece (1 a) and/or each cover portion (2a) is sterilized, especially by exposure to UV radiation, prior to or subsequent to the separation from the basic film (1) or the sealing film (2).

44. Method according to one of the preceding claims 1 to 43, wherein each film piece (1 a) and/or each packaging container (3) is/are positioned and/or held separately during the steps of filling, lettering, closing and/or separating.

45. A packaging machine comprising a molding station for molding plastic packaging containers, in particular performing a method according to at least one of the 4 preceding claims 1 to 44, in which a packaging container (3) or a plurality thereof having at least one undercut, respectively, can be produced from a separated piece (1a) of plastic film in a combined deep-drawing/blow-molding process, comprising a plastic film cutting station (116), a packaging container molding station (113), a filling station (114) for filling the packaging container (3) with a packing material, a sealing station (115) for sealing a filling opening of the packaging container (3), a separating station (116) for individualizing the packaging containers (3), and a discharge station (119) for the filled and sealed packaging containers (3), a preheating station (117) is provided upstream of the packaging container-molding stations (113) for preheating the plastic basic film (1) or the separated film pieces (1a), a pre-cutting station (125) disposed downstream of the molding station (113), said pre-cutting station (125) is adapted for only partially cutting the packaging container from the surrounding film piece (1 a), said container being provided with a seal film or other cover having an opening assistant, wherein a conveyor chain (110a) moves the respective film pieces (1a) with the formed packaging containers (3) extending downwardly therefrom into said pre-cutting station (125) performing a sealing rim and container edge portion while remaining the packaging container (3) to be connected to the film piece (1a) with film piece positioning means being provided upstream of filler nozzles (107) and a container positioning and holding unit (110b) is provided positioning said containers at a plurality of positioning points (110a') while, in conjunction with the sealing station (115), cover portions (2a) for the containers are prepared by a punching station (108) for preparing individually cover portions (2a) and a vacuum sucking means adapted to pick up said individually cut cover portions (2a) for placing same on the rim portion of the filled packaging containers (3).

46. The packaging machine according to claim 45, **characterized in that** in combination with the sealing station (115) a sealing film (2) is adapted to be sealed from above onto the continuously molded and filled packaging containers (3).

47. The packaging machine according to claim 45 or 46, **characterized in that** a pre-cutting station is disposed downstream of the molding station (113).

48. The packaging machine according to claim 47, **characterized in that** said pre-cutting station is adapted to cut, perforate or scribe a bottom crea of the packaging container to provide an opening there, said bottom area being sealed by a sealing film and/or provided with a re-useable cap attached to closure means, such as a thread or radial projection provided at the packaging container.

49. The packaging machine according to claim 45, **characterized in that** the molding station for at least one plastic packaging container (3), comprises an upper mold (4) and a lower mold (5), wherein an axially displaceable plug (8) is provided in the upper mold (4) and a mold cavity (12) in the lower mold (5), into which mold cavity (12) the plug (8) is displaceable under deep-drawing of a separated plastic film piece (1), the lower mold (5) is laterally divided and the lower mold halves (9,10) are movable substantially in a direction perpendicular to a motional direction of the plug (8) for opening and closing the lower mold (5), and comprising a compressed-gas supply means (6).

50. The packaging machine according to claim 49, **characterized in that** a bottom portion of the mold cavity (12) formed in the lower mold (5) is formed by a particularly vertically movable counter-plug (11).

51. The packaging machine according to claim 49 or 50, **characterized in that** the mold cavity (12) has at least one undercut (14).

52. The packaging machine according to at least one of the preceding claims 49 to 51, **characterized in that** the mold cavity (12) is rotationally symmetrical.

53. The packaging machine according to at least one of the preceding claims 49 to 52, **characterized in that** the lower mold halves (9,10) and or a counter-plug (11) are individually heated and/or cooled at least in part.

54. The packaging machine according to at least one of the preceding claims 49 to 53, **characterized in that** the upper and lower molds (4,5) are arranged in a column type guide frame and that upper and lower mold (4,5) constitutes a multi-cavity mold having a plurality of mold cavities (12) and plugs (8), and the multi-type mold cavities are arranged in series, the series arrangement being inclined with respect to a transportation direction of the plastic film piece (1), in particular extending perpendicularly to the travelling direction of the film piece (1a).

55. The packaging machine according to at least one of the preceding claims 49 to 54, **characterized in that** there is provided at the front side at least a control cam means (27) which comprises inclined control cams (32) which in combination with a vertical relative movement between lower mold (5) and control cam means (27) are adapted to be brought into engagement with molding elements (33) of the lower mold (5) for the lateral motional control of the opening and closing movement of the lower mold halves (9,10) of the lower mold (5).

56. The packaging machine according to claim 55, **characterized in that** the control cam means (27) is secured to a support plate arranged substantially in parallel with the support plate (17) of the lower mold (5), and projects through a recess (33) into the support plate (17) carrying the lower mold (5), for engagement with counter-molding elements (33) of the lower mold (5).

## Patentansprüche

1. Verfahren zur Herstellung von Verpackungsbehältern aus Kunststoffen mit einem Basisfilm, der zumindest in Teilen aus einem Kunststoffmaterial besteht, das in eine Form eingeführt wird, die eine obere Form und eine untere Form aufweist, und der Film einem Formgebungsverfahren unterzogen wird, wobei der Basisfilm (1) in die Form in Form von individuellen Filmstücken (1a) zugeführt wird, wobei jedes Filmstück (1a), zugeführt in die Form, zuerst durch zumindest einen Stempel (8) der oberen Form in einem Tiefziehverfahren in einen Formhohlraum (12) der unteren Form (5) verlagert wird, und ein endgültiges Formgebungsverfahren dann durch einen Blasform- Formgebungsverfahren mit Zuführung eines Gasmediums in die Form mit dem Film (1) ausgeführt wird, der an eine Wand des Formhohlraumes (12), gebildet in der unteren Form (5), verlagert wird, wobei der Basisfilm von einer Spule von synthetischem Kunstharzmaterial abgewickelt wird, bevor er zu einem Basisfilmschneider durch eine Zuführvorrichtung für eine genau abgemessene intermittierende Zuführung des Basisfilms (1) in den Basisfilmschneider zugeführt wird, wobei eine Bahn des Basisfilms (1) vor dem Schneiden oder die geschnittenen Filmstücke (1 a) einem Vorerwärmen unterworfen werden, wodurch eine Mehrzahl von Verpackungsbehältern (3) aus jedem abgeschnittenen Filmstück (1 a) gebildet wird, wobei die Verpackungsbehälter (3) jeweils mit zumindest einem Hinterschnitt versehen und nebeneinander in einer Reihe angeordnet sind, während stromab des Formgebens der Verpackungsbehälter aus dem jeweiligen Filmstück (1a) die Behälter (3), die eine Öffnungsunterstützung haben, teilweise gestanzt werden, um zu sichern, dass die Verpackungsbehälter mit dem umgebenden Filmstück (1 a) einstückig bleiben, während jeder Verpackungsbehälter durch einen separaten Deckelabschnitt (2a), der von dem Versiegelungsfilm (2) separiert worden ist, geschlossen wird, während vor dem Verschließen des Verpackungsbehälters, der Deckelabschnitt (2a), nachdem er zu einem Randabschnitt des Verpackungsbehälters durch einen Vakuumtransfer zugeführt worden ist, befestigt wird, wobei nach dem Anheften des Deckelabschnittes (2a) an dem Verpackungsbehälter (3) in einer punktförmigen Weise, ein endgültiges Versiegeln des Deckelabschnittes (2a) an dem Behälter (3) vorgesehen ist.

2. Verfahren nach Anspruch 1, wobei der Stempel (8) der oberen Form (4) über den Stempelweg mit einer variablen Geschwindigkeit bewegt wird.

3. Verfahren nach Anspruch 1 oder 2, wobei das gasförmige Medium Druckluft ist.

4. Verfahren nach zumindest einem der vorhergehenden Ansprüche 1 bis 3, wobei der Stempel (8) und / oder die untere Form (5) einer Temperatursteuerung unterzogen wird, insbesondere zumindest zum Teil erwärmt und / oder gekühlt wird.

5. Verfahren nach zumindest einem der vorhergehenden Ansprüche 1 bis 4, wobei, vor der Formgebung der Verpackungsbehälter (3), individuelle Filmstücke (1 a) von dem Basisfilm (1) separiert werden, wobei die Verpackungsbehälter (3) aus den Filmstücken (1a) nach dem Separieren gebildet werden.

6. Verfahren nach zumindest einem der vorhergehenden Ansprüche 1 bis 5, wobei der Basisfilm (1) in die individuellen Filmstücke (1 a) geschnitten wird, die eine Breite haben, die zumindest einen Durchmesser oder anderer Abmessung, insbesondere eine Breite eines herzustellenden Verpackungsbehälters haben.

7. Verfahren nach zumindest einem der vorhergehenden Ansprüche 1 bis 6, wobei eine Breite des Basisfilms (1) entsprechend eines mehrfachen Durchmessers oder Breitenabmessung des herzustellenden Verpackungsbehälters ausgewählt wird, um an eine Mehrzahl von Verpackungsbehältern angepasst zu sein, die aus demselben individuellen Filmstück (1 a) herstellbar sind, wobei der Verpackungsbehälter nebeneinander in einer Reihe angeordnet ist, wobei die sich erstreckende Reihe geneigt ist, insbesondere rechtwinklig zu der Laufrichtung des Filmstückes (1 a) durch das Verpackungsbehälter- Herstellungssystem, insbesondere einer Formfüll- und Versiegelungs- Maschine.

8. Verfahren nach Anspruch 6 oder 7, wobei das Filmstück (1 a) im Wesentlichen einem mehrfachen des Durchmessers des herzustellenden Verpackungsbehälters oder weniger entspricht.

9. Verfahren nach Anspruch 8, wobei eine Mehrzahl von vorhergehenden Behältern aus demselben Filmstück (1 a) hergestellt wird, die nebeneinander entlang der Laufrichtung des Filmstückes (1 a) angeordnet sind und in Bezug auf eine vorhergehende Reihe von Verpackungsbehältern, die sich geneigt erstreckt, angeordnet sind, insbesondere rechtwinklig zu der Laufrichtung des Filmstückes (1a) durch das Verpackungsbehälter- Herstellungssystem, insbesondere einer Formfüll- und Versiegelungs- Maschine.

10. Verfahren nach zumindest einem der vorhergehenden Ansprüche 1 bis 9, wobei der Basisfilm (1) in individuelle Filmstücke (1a) geschnitten ist, die eine Breite haben, die sich in der Laufrichtung der der Filmstücke (1 a) erstreckt, kleiner als ihre Länge, die sich rechtwinklig zu der Laufrichtung der der Filmstücke (1 a) erstreckt.

11. Verfahren nach zumindest einem der vorhergehenden Ansprüche 1 bis 10, wobei das Schneiden des Basisfilms (1) in individuelle Filmstücke (1a) und deren Größe durch den Durchmesser oder andere Abmessung, insbesondere die Breite und die Anzahl der Verpackungsbehälter, gewünscht von einem bestimmten Filmstück (1 a), festgelegt ist.

12. Verfahren nach zumindest einem der vorhergehenden Ansprüche 1 bis 11, wobei die Filmstücke (1 a) bevor sie in die Form zugeführt werden wieder- ausgerichtet werden.

13. Verfahren nach zumindest einem der vorhergehenden Ansprüche 1 bis 12, wobei die Filmstücke (1 a) separat voneinander entlang zumindest einer Fördereinrichtung (110) bewegt werden.

14. Verfahren nach zumindest einem der vorhergehenden Ansprüche 1 bis 13, wobei ein Verpackungsbehälter (3) aus jedem separiertem Filmstück (1 a) gebildet ist, wobei der Verpackungsbehälter (3) besonders mit zumindest einem Hinterschnitt versehen ist.

15. Verfahren nach Anspruch 1, wobei eine Mehrzahl der Verpackungsbehälter (3) aus jedem separiertem Filmstück (1 a) gebildet ist, wobei die Verpackungsbehälter (3) ausschließlich nebeneinander in einer Richtung rechtwinklig zu der Förderrichtung der Filmstücke (1 a) angeordnet sind.

16. Verfahren nach zumindest einem der vorhergehenden Ansprüche 1 bis 15, wobei die individuell beabstandeten Filmstücke (1a) auf einem Tragförderband oder einer Kette, oder einer Mehrzahl von solchen parallel angeordneter Fördereinrichtungen festgelegt sind, insbesondere festgesteckt oder unter Druck gebracht sind für ein temporäres Befestigen auf dem Förderband oder der Kette, oder durch ketten- oder ein band- gelagerte Befestigungsmittel, wie z. B. vorgespannte Klammern oder Greifer, gehalten werden.

17. Verfahren nach Anspruch 16, wobei das Förderband oder die Kette die Filmstücke (1 a) unter Mitwirkung von Stiften trägt, wobei das Förderband oder die Kette, die durch einen Präzisions- Servomotor angetrieben werden, in Führungsschienen entlang der Seiten des Verpackungsbehälter- Herstellungssystems geführt wird.

18. Verfahren nach Anspruch 1, wobei die Filmstücke (1a) vor- erwärmt werden, während sie festgesteckt oder auf andere Weise auf zwei Seiten des Förderbandes oder der Kette befestigt sind, befördert werden, insbesondere intermittierend unter direktem Kontakt von sowohl der Ober- als auch der Unterseite der Filmstücke (1 a) vorerwärmt werden.

19. Verfahren nach zumindest einem der vorhergehenden Ansprüche 1 bis 18, wobei, zum Bilden eines oder einer Mehrzahl von Verpackungsbehältern aus einem Filmstück (1 a), das angemessen positioniert wird zwischen der oberen und unteren Form, die untere Form, die geteilt ist, um eine jeweilige Anzahl von Formhohlräumen entsprechend der Kontur der (des) Verpackungsbehälter(s) zu bilden, angehoben wird und das Filmstück (1a) zwischen der oberen und der unteren Form hält, wobei das Filmstückmaterial in die jeweiligen Formhohlräume tiefgezogen wird und gegen die Hohlraumformen der unteren Form, um dort anzuhaften, gedrückt werden, während sich nach dem Beenden der Formgebung der Verpackungsbehälter die geteilte untere Form öffnet und absenkt, während der Tiefziehstempel in seine Ausgangsposition zurückgezogen wird.

20. Verfahren nach zumindest einem der vorhergehenden Ansprüche 1 bis 19, wobei die Verpackungsbehälter (3), gebildet aus einem Filmstück (1 a), mit einem zu verpackenden (104) Material gefüllt und / oder mit einem Versiegelungsfilm (2) verschlossen werden, bevor sie von dem Filmstück (1 a) separiert werden.

21. Verfahren nach Anspruch 20, wobei jeder Verpackungsbehälter (3) durch einen separaten Deckelabschnitt (2a), der von dem Versiegelungsfilm (2) separiert worden ist, verschlossen wird.

22. Verfahren nach Anspruch 21, wobei die Fläche des Deckelabschnittes (2a) im Wesentlichen zumindest der Fläche des Verpackungsbehälters (3), separiert von dem Filmstück (1a), entspricht.

23. Verfahren nach zumindest einem der vorhergehenden Ansprüche 20 bis 22, wobei der Deckelabschnitt (2a) zusätzlich mit einer Aufreißnase (2b) versehen ist, die nach dem Verbinden des Deckelabschnittes (2a) mit dem Verpackungsbehälter (3) radial von dem Randabschnitt des Verpackungsbehälters (3) vorspringt.

24. Verfahren nach zumindest einem der vorhergehenden Ansprüche 20 bis 23, wobei vor dem Schließen des Verpackungsbehälters (3) der Deckelabschnitt (2a), vorgesehen für diesen Zweck, an dem Verpackungsbehälter (3) in einer punktförmigen Weise, besonders mittels Punktschweißen, befestigt wird.

25. Verfahren nach zumindest einem der vorhergehenden Ansprüche 20 bis 24, wobei der Verpackungsbehälter (3) durch Schweißen, Heiß- oder Kalt- Versiegeln oder Ultraschallversiegeln an diesem für diesen Zweck vorgesehenen Versiegelungsabschnitt (2a) verschlossen wird, wobei die Deckelabschnitte vorzugsweise von einer Versiegelungsfilmzuführung in Richtung zu den Verpackungsbehältern durch eine Vakuumübertragungseinrichtung übertragen werden.

26. Verfahren nach zumindest einem der vorhergehenden Ansprüche 1 bis 19, wobei der Versiegelungsfilm in Streifen geschnitten wird, die in der Form den Filmstücken (1 a) entsprechen, gefolgt von Punktschweißen des jeweiligen Versiegelungsfilmstreifens an den jeweiligen Filmstücken (1 a), die die gefüllten Verpackungsbehälter aufweisen, um dieselben zu verschließen.

27. Verfahren nach Anspruch 26, wobei der Versiegelungsfilmstreifen und das Filmstück (1 a), der die gefüllten Verpackungsbehälter aufweist, die bereits grob miteinander entlang der Randabschnitte der geformten, befüllten Verpackungsbehälter befestigt werden, luftdicht durch Heiß- oder Kalt- Versiegeln unter erhöhter Temperatur und / oder Druck, oder durch Ultraschallversiegeln, insbesondere unter Mithilfe eines Randabschnittes des jeweiligen Verpackungsbehälters, von unten versiegelt werden.

28. Verfahren nach zumindest einem der vorhergehenden Ansprüche 1 bis 27, wobei die Verpackungsbehälter (3), verschlossen mit dem Versiegelungsfilm, teilweise einstückig mit dem verbliebenen Filmstück (1 a) sind, vorzugsweise abgekühlt und weiter befördert zu einer Schneidestation, um radial zumindest noch die verbliebenen Stege zu schneiden, während die Verpackungsbehälter unter Vakuum durch ein sich absenkendes Werkzeug gehalten werden, die sie auf das Förderband oder die Kette auflegen, um aus der Maschine geführt zu werden.

29. Verfahren nach zumindest einem der vorhergehenden Ansprüche 1 bis 28, wobei ein Behälterqualitäts- Überwachungssystem geschaffen ist, vorgesehen fehlerhafte Verpackungsbehälter aus der Maschine zu entfernen.

30. Verfahren nach zumindest einem der vorhergehenden Ansprüche 1 bis 25, wobei ein Restabfallfilmstück, nach der Abgabe der Verpackungsbehälter, aufgesteckt auf der Förderkette oder dem Förderband auf beiden Seiten desselben verbleibt, bis zu dem Übergang eines oberen Zuführzuges der Förderkette oder des - bandes in dem unteren Rückführzug der Förderkette oder des -bandes, wo das Restabfallfilmstück (1 a) von den Förderketten- oder -band stiften von den Stiften entfernt und gelöst wird.

31. Verfahren nach zumindest einem der vorhergehenden Ansprüche 1 bis 30, wobei der Verpackungsbehälter eine Verschlusseinrichtung aufweist, um damit eine Verschlusskappe zu verbinden.

32. Verfahren nach Anspruch 31, wobei die Verschlusseinrichtung auf der Seite des Versiegelungsfilms und / oder auf einer gegenüberliegenden (Boden-) Seite des Verpackungsbehälters zum daran Befestigen der Verschlusskappe vorgesehen sind.

33. Verfahren nach zumindest einem der vorhergehenden Ansprüche 31 bis 32, wobei die Verschlusskappe mit der Verschlusseinrichtung in einer Weise eines Schnappverschlusses verbunden ist.

34. Verfahren nach zumindest einem der vorhergehenden Ansprüche 31 bis 33, wobei die Verschlusskappe in Eingriff mit einem radial vorspringenden Umfangsvorsprung in einem Schnappverschluss gebracht wird oder, in einem Fall des Ausbildens der Verschlusseinrichtung als eine Verschraubung, daran verschraubt wird.

35. Verfahren nach einem der vorhergehenden Ansprüche 31 bis 34, wobei die Verschlusskappe auf einer Verschraubung, vorgesehen in dem Boden- oder HalsBereich des Verpackungsbehälters verschraubt wird, wobei die Verschraubung entweder unter dem Versiegelungsfilm in dem Halsbereich des Verpackungsbehälters, oder in dem Bodenbereich desselben auf einer gegenüberliegenden Seite von dem Versiegelungsfilm in dem Halsbereich vorgesehen ist.

36. Verfahren nach einem der vorhergehenden Ansprüche 31 bis 35, wobei die geformten Verpackungsbehälter aus der Formgebungsstation, miteinander verbunden, herausgenommen werden, einer Füllstation zugeführt und mit dem zu verpackenden Material befüllt werden, anschließend mit einem Versiegelungsfilm versiegelt und die gefüllten und verschlossenen Verpackungsmaterialen mittels Stanzen in dem Bereich eines Versiegelungsrandabschnittes voneinander separiert und abgefördert werden.

37. Verfahren nach einem der vorhergehenden Ansprüche 31 bis 36, wobei die Verpackungsbehälter, die mit dem zu verpackenden Material befüllt und mittels des Versiegelungsfilms verschlossen werden, zusätzlich mit einer Verschlusskappe, insbesondere einer Schraub- oder Schnappverschlusskappe auf der Seite des Versiegelungsfilms oder der gegenüberliegenden Seite des Verpackungsbehälters versehen werden.

38. Verfahren nach einem der vorhergehenden Ansprüche 1 bis 37, wobei stromab des Bildens der Verpackungsbehälter, insbesondere in dem Bereich des Vor-Schneideverfahrens, das an einer Bodenfläche des Verpackungsbehälters ausgeführt wird, der geschnitten und abgedichtet oder mit einem Bereich von reduzierte Materialdicke versehen wird, das Aufreiß- oder Öffnungsmittel vorgesehen sind, die der Bodenfläche des Behälters gestattet, später dort geöffnet zu werden.

39. Verfahren nach Anspruch 38, wobei ein Versiegelungsfilm, der eine Öffnungsunterstützungseinrichtung und / oder eine wieder verwendbare Kappe, insbesondere Verschraubungen oder Schnappverschlusskappen, hergestellt aus Kunststoff-Metall, aufweist, mit einem Bodenöffnungsbereich des Verpackungsbehälters verbunden ist.

40. Verfahren nach Anspruch 39, wobei der Versiegelungsfilm zum Verschließen einer Bodenöffnung, geschnitten oder gerissen in der Bodenfläche des Behälters, unter Anwendung von Temperatur und / oder Druck heiß oder kalt versiegelt, oder durch Ultraschallversiegeln unter Verwendung eines Ambosses, als Gegenstück in den Verpackungsbehälter von oben eingeführt, befestigt wird.

41. Verfahren nach einem der vorhergehenden Ansprüche 1 bis 40, wobei der Verpackungsbehälter (3) und / oder der Deckelabschnitt (2a) vorher beschriftet wird /werden, ehe er / sie von dem Filmstück (1 a) getrennt werden und / oder im Verlauf seiner / ihrer Herstellung oder danach zu etikettiert wird / werden.

42. Verfahren nach einem der vorhergehenden Ansprüche 1 bis 41, wobei der jeweilige Verfahrenschritt, wie z. B. die Formgebung, das Befüllen, Beschriften / Etikettieren, Verschließen und / oder Separieren aller Verpackungsbehälter (3) eines Filmstückes (1a) im Wesentlichen zu derselben Zeit für alle Verpackungsbehälter (3), die zu demselben Filmstück (1a) gehören, stattfindet.

43. Verfahren nach einem der vorhergehenden Ansprüche 1 bis 42, wobei jedes Filmstück (1a) und / oder jeder Deckelabschnitt (2a) sterilisiert wird, insbesondere durch Aussetzen einer UV- Strahlung, zuvor oder anschließend an die Separierung von dem Basisfilm (1) oder dem Versiegelungsfilm (2).

44. Verfahren nach einem der vorhergehenden Ansprüche 1 bis 43, wobei jedes Filmstück (1 a) und / oder jeder Verpackungsbehälter (3) positioniert und / oder während des Befüllens, Beschriftens, Verschließens und / oder Separierens separat gehalten wird / werden.

45. Verpackungsmaschine, aufweisend eine Formgebungsstation zum Formgeben von Kunststoff- Verpackungsbehältern, insbesondere Ausführen eines Verfahrens nach zumindest einem der vorhergehenden Ansprüche 1 bis 44, in dem ein Verpackungsbehälter (3) oder eine Mehrzahl derselben, die zumindest jeweils einen Hinterschnitt haben, aus einem abgetrennten Stück (1a) aus Kunststoff- Film in einem kombinierten Tiefzieh- / Blasform- Formgebungsverfahren hergestellt werden kann, aufweisend eine Kunstofffilm- Schneidestation (116), eine Verpackungsbehälter- Formgebungsstation (113), eine Füllstation (114) zum Befüllen des Verpackungsbehälters (3) mit einem zu verpackenden Material, eine Versiegelungsstation (115) zum Versiegeln einer Befüllöffnung des Verpackungsbehälters (3), eine Separierungsstation (116) zum Vereinzeln der Verpackungsbehälter (3) und eine Ausgabestation (119) für die befüllten und versiegelten Verpackungsbehälter (3), wobei eine Vorerwärmungsstation (117) stromauf der Verpackungsbehälter- Formgebungsstation (113) zum Vorerwärmen des Kunststoff-Basisfilms (1) oder der separierten Filmstücke (1a) vorgesehen ist, eine Vor-Schneidestation (125) stromab der Formgebungsstation (113) angeordnet ist, wobei die Vor- Schneidestation (125) nur für ein partielles Schneiden der Verpackungsbehälter aus dem umgebenden Filmstück (1 a) vorgesehen ist, der Behälter mit einem Versiegelungsfilm oder einer anderen Abdeckung, die eine Öffnungsunterstützung hat, versehen ist, wobei eine Förderkette (110a), die jeweiligen Filmstücke (1a) mit den gebildeten Verpackungsbehälter (3) bewegt, die sich von dieser nach unten in die Vor- Schneidestation (125) erstrecken, die einen Versiegelungsrand und den Behälterkantenabschnitt ausbilden, während der Verpackungsbehälter (3) verbleibt, um mit dem Filmstück (1 a) verbunden zu bleiben, wobei Filmstückpositionierungsmittel stromauf von Befüllungsdüsen (107) vorgesehen sind, und wobei eine Behälterpositionierungs- und Halte- Einheit (110b vorgesehen ist, die die Behälter an einer Mehrzahl von Positionierungspunkten (110a) positioniert, während, in Verbindung mit der Versiegelungsstation (115), Deckelabschnitte (2a) für die Behälter durch eine Stempelstation (108) zum Vorbereiten einzelner Deckelabschnitte (2a) vorbereitet werden und eine Vakuumsaugeinrichtung vorgesehen ist, die einzelnen geschnittenen Deckelabschnitte (2a) zum Anordnen derselben an dem Randabschnitt der gefüllten Verpackungsbehälter (3) aufzunehmen.

46. Verpackungsmaschine nach Anspruch 45, **dadurch gekennzeichnet, dass** in Kombination mit der Versiegelungsstation (115) ein Versiegelungsfilm (2) vorgesehen ist, um von oben auf die fortlaufend geformten und befüllten Verpackungsbehälter (3) versiegelt zu werden.

47. Verpackungsmaschine nach Anspruch 45 oder 46, **dadurch gekennzeichnet, dass** eine Vor- Schneidestation stromab der Formgebungsstation (113) angeordnet ist.

48. Verpackungsmaschine nach Anspruch 47, **dadurch gekennzeichnet, dass** die Vor- Schneidestation vorgesehen ist, eine Bodenfläche des Verpackungsbehälters zu schneiden, zu perforieren oder aufzureißen, um dort eine Öffnung zu schaffen, wobei die Bodenfläche durch einen Versiegelungsfilm versiegelt und /oder mit einer wiederverwendbaren Kappe, verbunden mit Verschlussmitteln, wie z. B. einer Verschraubung oder einem radialen Vorsprung an dem Verpackungsbehälter versehen ist.

49. Verpackungsmaschine nach Anspruch 45, **dadurch gekennzeichnet, dass** die Formgebungsstation für zumindest einen Kunststoff- Verpackungsbehälter (3) eine obere Form (4) und eine untere Form (5) aufweist, wobei ein axial verlagerbarer Stempel (8) in der oberen Form (4) und ein Formhohlraum (12) in der unteren Form (5) vorgesehen ist, wobei in den Formhohlraum (12) der Stempel (8) unter Tiefziehen eines separierten Kunststoff- Filmstückes (1a) verlagerbar ist, die untere Form (5) seitlich geteilt ist und die unteren Formhälften (9, 10) im Wesentlichen in eine Richtung rechtwinklig zu einer Bewegungsrichtung des Stempels (8) zum Öffnen oder Schließen der unteren Form (5) bewegbar sind, und eine Druckpress- Zuführungseinrichtung (6) aufweist.

50. Verpackungsmaschine nach Anspruch 49, **dadurch gekennzeichnet, dass** ein Bodenabschnitt des Formhohlraums (12), gebildet in der unteren Form (5), durch einen insbesondere vertikal bewegbaren Gegenstempel (11) gebildet ist.

51. Verpackungsmaschine nach Anspruch 49 oder 50, **dadurch gekennzeichnet, dass** der Formhohlraum (12) zumindest einen Hinterschnitt (11) hat.

52. Verpackungsmaschine nach zumindest einem der vorhergehenden Ansprüche 49 bis 51, **dadurch gekennzeichnet, dass** der Formhohlraum (12) rotationssymmetrisch ist.

53. Verpackungsmaschine nach zumindest einem der vorhergehenden Ansprüche 49 bis 52, **dadurch gekennzeichnet, dass** die unteren Formhälften (9, 10) und /oder ein Gegenstempel (11) zumindest teilweise individuell erwärmt und / oder gekühlt sind.

54. Verpackungsmaschine nach zumindest einem der vorhergehenden Ansprüche 49 bis 53, **dadurch gekennzeichnet, dass** die obere und die untere Form (4, 5) in einem Führungsrahmen vom Säulen- Typ angeordnet sind und dass die obere und untere Form (4, 5) eine Mehrfach- Hohlraumform bilden, mit einer Mehrzahl von Formhohlräumen (12) und Stempeln (12), und wobei die Mehrfach- Formhohlräume in Reihe angeordnet sind, die in Bezug auf eine Transportrichtung der Kunststoff- Filmstücke (1a) geneigt sind, sich insbesondere rechtwinklig zu der Laufrichtung des Filmstückes (1 a) erstrecken.

55. Verpackungsmaschine nach zumindest einem der vorhergehenden Ansprüche 49 bis 54, **dadurch gekennzeichnet, dass** an der Vorderseite zumindest eine Steuernockeneinrichtung (27) vorgesehen ist, die geneigte Steuernocken (32) aufweist, die in Kombination mit einer vertikalen Relativbewegung zwischen unterer Form (5) und der Steuernockeneinrichtung (27) vorgesehen sind, um in Eingriff mit den Formgebungselementen (33) der unteren Form (5) für die seitliche Bewegungssteuerung der Öffnungs- und Schließ- Bewegung der unteren Formgebungshälften (9, 10) der unteren Form (5) gebracht zu werden.

56. Verpackungsmaschine nach Anspruch 55, **dadurch gekennzeichnet, dass** die Steuernockeneinrichtung (27) auf einer Tragplatte befestigt ist, im Wesentlichen parallel mit der Tragplatte (17) der unteren Form (5) angeordnet, und durch eine Aussparung (33) in die Tragplatte (17), die die untere Form trägt, vorspringt, um mit den Gegen- Formgebungselementen (33) der unteren Form (5) in Eingriff zu kommen.

## Revendications

1. Procédé de production de récipients d'emballage en plastique, un film de base constitué au moins en partie d'une matière plastique étant introduit dans un moule comprenant un moule supérieur et un moule inférieur, et le film étant soumis à un processus de moulage, dans lequel le film de base (1) est disposé dans le moule sous la forme de morceaux de film (1a) individuels, chaque morceau de film (1a) disposé dans le moule est d'abord déplacé par au moins un élément d'obturation (8) du moule supérieur dans un procédé d'emboutissage profond jusque dans une cavité de moule (12) du moule inférieur (5) et un procédé de moulage final est ensuite effectué par une opération de moulage par soufflage en fournissant un milieu gazeux dans le moule, le film (1) étant placé sur une paroi de la cavité de moule (12) formée dans le moule inférieur (5), ledit film de base est déroulé à partir d'une bobine de matériau à base de résine synthétique avant d'être avancé jusqu'à un dispositif de découpage de film de base par un mécanisme d'alimentation pour une fourniture intermittente d'une quantité précise du film de base (1) au dispositif de découpage de film de base, dans lequel une bande du film de base (1) avant le découpage ou les morceaux de film découpés (1a) est/sont soumis(e) à un préchauffage, dans lequel une pluralité de récipients d'emballage (3) est formée à partir de chaque morceau de film séparé (1a), lesdits récipients d'emballage (3) étant chacun dotés d'au moins une contre-dépouille et disposés côte à côte en une rangée, en aval du moulage des récipients d'emballage à partir du morceau de film respectif (1a), des récipients (3) comportant une assistance à l'ouverture étant partiellement perforés, ce qui garantit au récipient d'emballage de rester d'un seul tenant avec le morceau de film (1a) qui l'entoure, chaque récipient d'emballage étant fermé par une partie formant couvercle (2a) séparée qui a été séparée du film scelleur (2), tandis que la partie formant couvercle (2a) étant fixée avant la fermeture du récipient d'emballage (3), après sa disposition sur une partie rebord du récipient d'emballage par transfert sous vide, dans lequel, après ladite fixation de la partie couvercle (2a) au niveau du récipient d'emballage (3) d'une manière par points, il est prévu le scellage final de la partie couvercle (2a) au niveau du récipient (3).

2. Procédé conformément à la revendication 1, dans lequel l'élément d'obturation (8) du moule supérieur (4) est déplacé sur un trajet d'élément d'obturation à une vitesse variable.

3. Procédé conformément à la revendication 1 ou 2, dans lequel le milieu gazeux est de l'air comprimé.

4. Procédé conformément à au moins l'une des revendications 1 à 3, dans lequel l'élément d'obturation (8) et/ou le moule inférieur (5) est/sont soumis à une régulation de température, plus précisément, est/sont chauffé(s) et/ou refroidi(s) au moins partiellement.

5. Procédé conformément à au moins l'une des revendications 1 à 4, dans lequel, avant la formation des récipients d'emballage (3), des morceaux de film (1a) individuels sont séparés du film de base (1), les récipients d'emballage (3) étant formés à partir desdits morceaux de film (1a) après ladite séparation.

6. Procédé conformément à au moins l'une des revendications 1 à 5, dans lequel le film de base (1) est découpé sous la forme desdits morceaux de film (1a) individuels présentant une largeur correspondant à au moins un diamètre ou une autre dimension, notamment une largeur, d'un récipient d'emballage à fabriquer.

7. Procédé conformément à au moins l'une des revendications 1 à 6, dans lequel une largeur du film de base (1) est sélectionnée conformément à un multiple d'une dimension de diamètre ou de largeur du récipient d'emballage à fabriquer de manière à s'adapter à une pluralité de récipients d'emballage pouvant être produits à partir du même morceau de film (1a) individuel, lesdits récipients d'emballage étant disposés côte à côte en une rangée, ladite rangée s'étendant de manière inclinée, notamment perpendiculairement à la direction de trajet du morceau de film (1a) à travers le système de fabrication de récipient d'emballage, notamment une machine formeuse-remplisseuse-scelleuse.

8. Procédé conformément à la revendication 6 ou 7, dans lequel la largeur du morceau de film (1a) correspond sensiblement à un multiple du diamètre du récipient d'emballage à fabriquer, ou moins.

9. Procédé conformément à la revendication 8, dans lequel une pluralité de récipients précédents est fabriquée à partir du même morceau de film (1a), lesquels sont disposés côte à côte suivant la direction de trajet du morceau de film (1a) et sont disposés de manière chevauchante relativement à une rangée précédente de récipients d'emballage s'étendant de manière inclinée, notamment perpendiculairement à la direction de trajet du morceau de film (1a) à travers le système de fabrication de récipient d'emballage, notamment une machine formeuse-remplisseuse-scelleuse.

10. Procédé conformément à au moins l'une des revendications 1 à 9, dans lequel le film de base (1) est découpé en morceaux de film (1a) individuels présentant une largeur s'étendant dans la direction de trajet des morceaux de film (1a) plus petite que leur longueur s'étendant perpendiculairement à la direction de trajet des morceaux de film (1a).

11. Procédé conformément à au moins l'une des revendications 1 à 10, dans lequel le découpage du film de base (1) en des morceaux de film individuels (1a) et la dimension de ces derniers sont déterminés par le diamètre ou une autre dimension, notamment la largeur, et le nombre de récipients d'emballage requis à partir d'un certain morceau de film (1 a).

12. Procédé conformément à au moins l'une des revendications 1 à 11, dans lequel les morceaux de film (1a) sont réorientés avant leur disposition dans le moule.

13. Procédé conformément à au moins l'une des revendications 1 à 12, dans lequel les morceaux de film (1a) sont déplacés séparément les uns des autres suivant au moins un moyen de transport (110).

14. Procédé conformément à au moins l'une des revendications 1 à 13, dans lequel un récipient d'emballage (3) est formé à partir de chaque morceau de film (1a) séparé, ledit récipient d'emballage (3) étant spécialement doté d'au moins une contre-dépouille.

15. Procédé conformément à la revendication 1, dans lequel une pluralité de récipients d'emballage (3) est formée à partir de chaque morceau de film (1a) séparé, lesdits récipients d'emballage (3) étant exclusivement disposés côte-à-côte dans une direction perpendiculaire à la direction de transport des morceaux de film (1a).

16. Procédé conformément à au moins l'une des revendications 1 à 15, dans lequel les morceaux de film (1a) espacés individuellement sont immobilisés sur une courroie ou une chaîne de transport de support, ou une pluralité de tels moyens de transport disposés en parallèle, en particulier sont goupillés ou mis sous pression pour une fixation temporaire, la courroie ou la chaîne de transport étant maintenue par un moyen d'attache supporté par chaîne ou courroie tel que des griffes ou des pinces sollicitées par ressort.

17. Procédé conformément à la revendication 16, dans lequel la courroie ou la chaîne de transport porte les morceaux de film (1a) à l'aide de goupilles, ladite courroie ou chaîne de transport entraînée par un servomoteur de précision étant guidée dans des rails de guidage suivant des côtés du système de fabrication de récipient d'emballage.

18. Procédé conformément à la revendication 1, dans lequel les morceaux de film (1a) sont préchauffés pendant qu'ils sont transportés goupillés ou autrement fixés sur deux côtés de la courroie ou de la chaîne de transport, en particulier sont préchauffés par intermittence sous contact direct à partir des côtés supérieurs et inférieurs des morceaux de film (1a).

19. Procédé conformément à au moins l'une des revendications 1 à 18, dans lequel, pour former un ou une pluralité de récipient(s) d'emballage à partir d'un morceau de film (1a) positionné de manière appropriée entre les moules supérieur et inférieur, ledit moule inférieur, qui est divisé afin de définir un nombre de cavités de moule respectif correspondant au contour du ou des récipient(s) d'emballage, est levé et maintient le morceau de film (1a) entre les moules supérieur et inférieur, la matière du morceau de film faisant l'objet d'un emboutissage profond jusque dans les cavités de moule respectives et étant poussée contre les cavités de moule du moule inférieur de manière à y être collé, après l'achèvement de la formation du récipient d'emballage, le moule inférieur divisé s'ouvrant et descendant tandis que l'élément d'obturation d'emboutissage profond est amené à se rétracter dans sa position initiale.

20. Procédé conformément à au moins l'une des revendications 1 à 19, dans lequel les récipients d'emballage (3) formés à partir d'un morceau de film (1a) sont remplis de matière à emballer (104) et/ou fermés à l'aide d'un film scelleur (2) avant d'être séparés du morceau de film (1a).

21. Procédé conformément à la revendication 20, chaque récipient d'emballage (3) étant fermé par une partie couvercle (2a) séparée, qui a été séparée du film scelleur (2).

22. Procédé conformément à la revendication 21, dans lequel la zone de la partie couvercle (2a) correspond essentiellement à la zone du récipient d'emballage (3) séparée du morceau de film (1a).

23. Procédé conformément à au moins l'une des revendications 20 à 22, dans lequel la partie couvercle (2a) est en plus dotée d'une languette d'arrachage (2b), laquelle, après avoir fixé la partie couvercle (2a) au récipient d'emballage (3), fait saillie radialement à partir d'une partie rebord du récipient d'emballage (3).

24. Procédé conformément à au moins l'une des revendications 20 à 23, dans lequel, avant la fermeture du récipient d'emballage (3), la partie couvercle (2a) prévue à cet effet est fixée au récipient d'emballage (3) d'une manière par points, notamment au moyen d'un soudage par points.

25. Procédé conformément à au moins l'une des revendications 20 à 24, dans lequel le récipient d'emballage (3) est fermé par soudage, scellage à froid ou à chaud ou scellage par ultrasons de la partie couvercle (2a) prévue à cet effet sur celui-ci, lesdites parties couvercles étant de préférence transférées à partir d'une fourniture de film scelleur vers les récipients d'emballage par un moyen de transfert sous vide.

26. Procédé conformément à au moins l'une des revendications 1 à 19, dans lequel le film scelleur est découpé en bandes dont la forme correspondant aux morceaux de film (1a), puis la bande de film scelleur respective est soudée par points aux morceaux de film (1a) respectifs constituant les récipients d'emballage remplis pour fermer ces derniers.

27. Procédé conformément à la revendication 26, dans lequel la bande de film scelleur et le morceau de film (1a) constituant les récipients d'emballage remplis déjà grossièrement fixés les uns aux autres le long de parties rebords des récipients d'emballage remplis formés sont scellés hermétiquement par scellage à chaud ou à froid sous une température et/ou pression accrue ou par scellage par ultrasons, notamment avec le support d'une partie rebord du récipient d'emballage respectif depuis le dessous.

28. Procédé conformément à au moins l'une des revendications 1 à 27, dans lequel les récipients d'emballage (1) fermés à l'aide du film scelleur sont partiellement d'un seul tenant avec le morceau de film (1a) restant, de préférence refroidis et avancés jusqu'à un poste de découpage pour découper radialement au moins les bandes restant encore, les récipients d'emballage étant maintenus sous vide par un outil supérieur descendant, qui les place sur la courroie ou chaîne de transport afin de les alimenter en sortie de la machine.

29. Procédé conformément à au moins l'une des revendications 1 à 28, dans lequel un système de surveillance de qualité de récipient est conçu de manière à être adapté pour enlever des récipients d'emballage défectueux de la machine.

30. Procédé conformément à au moins l'une des revendications 1 à 25, dans lequel un morceau de film usagé restant, après la décharge des récipients d'emballage, demeure goupillé à la courroie ou à la chaîne de transport des deux côtés de celle-ci jusqu'à la transition d'un train d'alimentation supérieur de la courroie ou de la chaîne de transport dans le train de retour inférieur de la chaîne ou de la courroie de transport où le morceau de film (1a) est enlevé des goupilles de la courroie ou de la chaîne de transport et est détaché.

31. Procédé conformément à au moins l'une des revendications 1 à 30, dans lequel le récipient d'emballage comprend des moyens de fermeture pour fixer un opercule de fermeture sur ce dernier.

32. Procédé conformément à la revendication 31, dans lequel les moyens de fermeture sont disposés sur le côté du film scelleur et/ou sur un côté opposé (inférieur) du récipient d'emballage pour y fixer l'opercule de fermeture.

33. Procédé conformément à au moins l'une des revendications 31 ou 32, dans lequel l'opercule de fermeture est raccordé aux moyens de fermeture à la manière d'un encliquetage.

34. Procédé conformément à au moins l'une des revendications 31 à 33, dans lequel l'opercule de fermeture est amené en prise avec une saillie circonférentielle faisant saillie radialement dans un encliquetage, et, dans le cas d'une conception des moyens de fermeture sous forme de filet, est vissé sur celle-ci.

35. Procédé conformément à l'une des revendications 31 à 34, dans lequel l'opercule de fermeture est vissé sur un filet disposé dans la partie inférieure ou une zone de col du récipient d'emballage, ledit filet étant disposé soit au-dessous du film scelleur dans la zone de col du récipient d'emballage soit dans la zone inférieure de celui-ci sur un côté opposé à partir du film scelleur dans la zone de col.

36. Procédé conformément à l'une des revendications 31 à 35, dans lequel les récipients d'emballage moulés sont extraits du poste de moulage de manière continue les uns aux autres, fournis à un poste de remplissage et sont remplis de la matière à emballer, ensuite scellés à l'aide d'un film scelleur et les matières d'emballage alimentées et fermées au moyen d'une perforation dans la zone d'une partie rebord de scellage sont séparées les unes des autres et alimentées plus loin.

37. Procédé conformément à l'une des revendications 31 à 36, dans lequel lesdits récipients d'emballage remplis de la matière à emballer et fermés au moyen du film scelleur sont en plus dotés d'un opercule de fermeture, notamment une capsule à vis ou encliquetable, sur le côté du film scelleur ou le côté opposé du récipient d'emballage.

38. Procédé conformément à l'une des revendications 1 à 37, dans lequel en aval du formage des récipients d'emballage, notamment dans la zone du procédé de pre-découpage effectué au niveau d'une zone inférieure du récipient d'emballage découpé ou scellé ou doté d'une zone d'épaisseur de matière réduite, des moyens d'arrachage ou d'ouverture permettant à la zone inférieure du récipient d'être ouverte ultérieurement sont prévus.

39. Procédé conformément à la revendication 38, dans lequel un film scelleur comprenant une assistance à l'ouverture et/ou une capsule réutilisable de film scelleur, notamment des vis ou des capsules encliquetables constituées de métal plastifié, est fixé à une zone d'ouverture inférieure du récipient d'emballage.

40. Procédé conformément à la revendication 39, dans lequel ledit film scelleur pour fermer une ouverture inférieure découpée ou rainurée dans la zone inférieure du récipient est scellé à chaud ou à froid lors de l'application de température et/ou de pression ou fixé par scellage par ultrasons par en-dessous à l'aide d'une enclume introduite dans le récipient d'emballage depuis le dessus en tant que contre-pièce.

41. Procédé conformément à l'une des revendications 1 à 40, dans lequel le récipient d'emballage (3) et/ou la partie couvercle (2a) est/sont sujet(s) à une inscription avant leur séparation du morceau de film (1a) et/ou étiqueté(s) au cours de la fabrication ou ultérieurement ;

42. Procédé conformément à l'une des revendications 1 à 41, dans lequel les étapes de procédé respectives, telles que le formage, le remplissage, l'inscription/l'étiquetage, la fermeture et/ou la séparation de tous les récipients d'emballage (3) d'un morceau de film (1a) ont lieu essentiellement en même temps pour tous les récipients d'emballage (3) appartenant au même morceau de film (1a).

43. Procédé conformément à l'une des revendications 1 à 42, dans lequel chaque morceau de film (1a) et/ou chaque partie couvercle (2a) est/sont stérilisée(s), notamment par exposition au rayonnement ultraviolet, avant ou suite à la séparation du film de base (1) ou du film scelleur (2).

44. Procédé conformément à l'une des revendications 1 à 43, dans lequel chaque morceau de film (1a) et/ou chaque récipient d'emballage (3) est/sont positionné(s) et/ou maintenu(s) séparément pendant les étapes de remplissage, d'inscription, de fermeture et/ou de séparation.

45. Machine de conditionnement comprenant un poste de moulage pour le moulage de récipients d'emballage en plastique, mettant notamment en oeuvre un procédé conformément à au moins l'une des revendications 1 à 4, dans lequel un récipient d'emballage (3) ou une pluralité de ceux-ci comprenant au moins une contre-dépouille, respectivement, peut être produit(e) à partir d'un morceau de film (1a) plastique séparé dans un procédé d'emboutissage profond/moulage par soufflage combiné, comprenant un poste de découpage de film plastique (116), un poste de moulage de récipient d'emballage (113), un poste de remplissage (114) pour remplir le récipient d'emballage (3) d'une matière d'emballage, un poste de scellage (115) pour sceller une ouverture de remplissage du récipient d'emballage (3), un poste de séparation (116) pour rendre les récipients d'emballage (3) individuels, et un poste de décharge (119) pour les récipients d'emballage remplis et scellés (3), un poste de préchauffage (117) est disposé en amont du poste de moulage de récipient d'emballage (113) pour préchauffer le film de base (1) en plastique ou les morceaux de film (1a) séparés, un poste de pré-découpage (125) est disposé en aval de la station de moulage (113), ledit poste de pré-découpage (125) est conçu pour seulement découper partiellement le récipient d'emballage à partir du morceau de film (1a) l'entourant, ledit récipient étant doté d'un film scelleur ou d'un autre couvercle comprenant une assistance à l'ouverture, dans lequel une chaîne de transport (110a) déplace les morceaux de film (1a) respectifs, les récipients d'emballage (3) formés s'étendant vers le bas à partir de ceux-ci, jusque dans ledit poste de pré-découpage (125) réalisant un rebord de scellage et une partie bord de récipient, tout en laissant le récipient d'emballage (3) raccordé au morceau de film (1a), des moyens de positionnement de morceau de film étant disposés en amont de buses de remplissage (107) et une unité de maintien et de positionnement de récipient (110b) est prévue pour positionner lesdits récipients au niveau d'une pluralité de points de positionnement (110a'), en conjonction avec le poste de scellage (115), des parties couvercles (2a) pour les récipients étant préparés par un poste de perforation (108) pour préparer individuellement des parties couvercles (2a) et un moyen d'aspiration sous vide conçu pour attraper lesdites parties couvercles (2a) découpées individuellement pour placer celles-ci sur la partie rebord des récipients d'emballage (3) remplis.

46. Machine d'emballage conformément à la revendication 45, **caractérisée en ce que,** en combinaison avec le poste de scellage (115), un film scelleur (2) est conçu pour être scellé à partir du dessus sur les récipients d'emballage (3) moulés et remplis en continu.

47. Machine d'emballage conformément à la revendication 45 ou 46, **caractérisée en ce qu'**un poste de pré-découpage est disposé en aval du poste de moulage (113).

48. Machine d'emballage conformément à la revendication 47, **caractérisée en ce que** ledit poste de pré-découpage est conçu pour un découpage, une perforation ou un rainurage d'une zone inférieure du récipient d'emballage afin de former une ouverture à cet endroit, ladite zone inférieure étant scellée par un film scelleur et/ou dotée d'une capsule réutilisable fixée à des moyens de fermeture, tels qu'un filet ou une saillie radiale disposée au niveau du récipient d'emballage.

49. Machine d'emballage conformément à la revendication 45, **caractérisée en ce que** le poste de moulage, pour au moins un récipient d'emballage (3) en plastique, comprend un moule supérieur (4) et un moule inférieur (5), dans lequel un élément d'obturation (8) pouvant être déplacé axialement est disposé dans le moule supérieur (4) et une cavité de moule (12) dans le moule inférieur (5), dans laquelle cavité de moule (12) l'élément d'obturation (8) peut être déplacé sous emboutissage profond d'un morceau de film (1) plastique séparé, le moule inférieur (5) étant divisé latéralement et les moitiés de moule inférieures (9, 10) sont mobiles sensiblement dans une direction perpendiculaire à une direction de déplacement de l'élément d'obturation (8) pour ouvrir et fermer le moule inférieur (5), et comprenant des moyens d'alimentation en gaz comprimé (6).

50. Machine d'emballage conformément à la revendication 49, **caractérisée en qu'**une partie inférieure de la cavité de moule (12) formée dans le moule inférieur (5) est formée par un contre-élément d'obturation mobile spécifiquement de manière verticale (11).

51. Machine d'emballage conformément à la revendication 49 ou 50, **caractérisée en que** la cavité de moule (12) comprend au moins une contre-dépouille (14).

52. Machine d'emballage conformément à au moins l'une des revendications 49 à 51, **caractérisée en ce que** la cavité de moule (12) est symétriquement rotationnelle.

53. Machine d'emballage conformément à au moins l'une des revendications 49 à 52, **caractérisée en ce que** les moitiés de moule inférieures (9, 10) et/ou un contre-élément d'obturation (11) est/sont chauffé(s) et/ou refroidi(s) individuellement au moins partiellement.

54. Machine d'emballage conformément à au moins l'une des revendications 49 à 53, **caractérisée en ce que** les moules supérieur et inférieur (4, 5) sont disposés dans un cadre de guidage de type colonne et **en ce que** les moules supérieur et inférieur (4, 5) constituent un moule à plusieurs cavités comprenant une pluralité de cavités de moule (12) et des éléments d'obturation (8), et les cavités de moule à plusieurs types sont disposées en série, la disposition en série étant inclinée relativement à une direction de transport du morceau de film (1) plastique, s'étendant notamment perpendiculairement à la direction de transport du morceau de film (1a).

55. Machine d'emballage conformément à au moins l'une des revendications 49 à 54, **caractérisée en ce qu'**il est prévu, au niveau du côté avant, au moins un moyen de came de commande (27) comprenant des cames de commande (32) inclinées, lesquelles, en combinaison avec un mouvement vertical relatif entre le moule inférieur (5) et le moyen de came de commande (27), sont adaptées pour être amenées en prise avec les éléments de moulage (33) du moule inférieur (5) pour la commande de mouvement latéral du mouvement d'ouverture et de fermeture des moitiés de moule inférieures (9, 10) du moule inférieur (5).

56. Machine d'emballage conformément à la revendication 55, **caractérisée en ce que** le moyen de came de commande (27) est fixé à une plaque de support disposée sensiblement en parallèle à la plaque de support (17) du moule inférieur (5), et fait saillie à travers un évidement (33) jusque dans la plaque de support (17) portant le moule inférieur (5), pour une mise en prise avec des éléments de contre-moulage (33) du moule inférieur (5).
